# EUROPEAN PATENT APPLICATION

(11) **EP 4 783 573 A1**
(43) Date of publication of application: **29.07.2026**
(21) Application number: 24876143.9
(22) Date of filing: 09.07.2024
(51) Int. Cl.: H04N 19/105

(54) **IMAGE ENCODING AND DECODING METHODS AND APPARATUS**

(30) Priority: 12.10.2023 CN 202311324903
(71) Applicant: HUAWEI TECHNOLOGIES CO., LTD., Shenzhen 518129 (CN)
(72) Inventor: XU, Yiqun, Shenzhen, Guangdong 518129 (CN); SUN, Yule, Shenzhen, Guangdong 518129 (CN); LIN, Zehui, Shenzhen, Guangdong 518129 (CN); CAI, Kangying, Shenzhen, Guangdong 518129 (CN)
(74) Representative: Goddar, Heinz J.
(86) International application number: PCT/CN2024/104446
(87) International publication number: WO 2025/077322

(57) **Abstract**

This application provides a picture encoding and decoding method and an apparatus. The picture encoding and decoding method in this application includes: receiving a bitstream; obtaining, based on the bitstream, a residual picture and a first reference frame list that correspond to a current frame; obtaining a virtual reference frame corresponding to the current frame; obtaining, based on the virtual reference frame and the first reference frame list, a second reference frame list corresponding to the current frame; obtaining, based on the second reference frame list, a predicted picture corresponding to the current frame; and performing reconstruction based on the predicted picture and the residual picture, to obtain a reconstructed picture of the current frame. In this application, inter coding performance can be improved, and a bit rate can further be reduced.

## Description

### TECHNICAL FIELD

This application relates to picture processing technologies, and in particular, to a picture encoding and decoding method and an apparatus.

### BACKGROUND

In many scenarios (for example, games and virtual reality (Virtual Reality, VR)/augmented reality (Augmented Reality, AR)), rendering needs to be performed to generate a picture, so that the obtained picture is more realistic. This can improve user experience. Rendering requires strong computational power. However, due to limitations of objective physical conditions such as a device size and power consumption, computational power of a device-side device is usually far weaker than that of a cloud-side server. Therefore, rendering is usually deployed on the cloud-side server. The cloud-side server performs rendering, then compresses a rendered picture/video, and sends the compressed picture/video to the device-side device for display. As people's requirements for rendering quality are continuously higher and definition of display devices is continuously improved, picture quality and resolution of the rendered picture/video are also continuously improved accordingly. Consequently, bit rate overheads of the compressed rendered picture/video are increased, network bandwidth occupation is increased, and an interaction delay is large.

Therefore, reducing a bit rate is an important research direction.

### SUMMARY

This application provides a picture encoding and decoding method and an apparatus, to improve inter coding performance and further reduce a bit rate.

According to a first aspect, this application provides a picture decoding method, including: receiving a bitstream; obtaining, based on the bitstream, a residual picture and a first reference frame list that correspond to a current frame; obtaining a virtual reference frame corresponding to the current frame; obtaining, based on the virtual reference frame and the first reference frame list, a second reference frame list corresponding to the current frame; obtaining, based on the second reference frame list, a predicted picture corresponding to the current frame; and performing reconstruction based on the predicted picture and the residual picture, to obtain a reconstructed picture of the current frame.

In this embodiment, a reference frame list is modified, the virtual reference frame is added to the reference frame list as a factor, and time domain correlation between the virtual reference frame and the current frame can be fully used. This can improve inter coding performance, and further reduce a bit rate.

A decoder may parse the bitstream to obtain the residual picture of the current frame. In addition, when performing inter prediction on the current frame, an encoder side (for example, a server in a device-cloud collaboration system) creates a reference frame list for the current frame according to a specific rule, and sets a flag for an original reference frame in the list. The flag may be transmitted to the decoder as a syntax element along with the bitstream. Based on this, when processing the current frame, the decoder may obtain the flag by parsing the bitstream, and then add the reconstructed picture with the flag to the reference frame list of the current frame. In this case, the reference frame list includes only the reconstructed picture, and may be referred to as the first reference frame list.

In consideration of diversity of video pictures, for some picture frames, good encoding/decoding effect may be obtained by using an original reference frame, and for some picture frames, good encoding/decoding effect may be obtained only by using a virtual reference frame. Therefore, in video coding in this application, a solution in which the original reference frame is used may be combined with a solution in which the virtual reference frame is used. For example, a syntax element is added, and a value is assigned to the syntax element, to indicate whether the decoder uses the virtual reference frame; or the decoder determines, according to a preset rule, whether to use the virtual reference frame.

Optionally, when determining not to use the virtual reference frame, the decoder may obtain an original reference frame from the first reference frame list with reference to a standard video coding solution to perform inter prediction.

Optionally, when determining to use the virtual reference frame, the decoder may generate the virtual reference frame. The virtual reference frame is a reference frame generated based on prior information. The prior information includes decoded information inside an encoder and information other than a to-be-encoded video/picture. The virtual reference frame may be used as supplementary information for inter coding, to further remove video time domain redundancy.

In this application, when the virtual reference frame is used, a problem of initialization of the virtual reference frame needs to be resolved, and memory space application, use, and release are involved.

In a possible implementation, the virtual reference frame is stored not in a storage space of a decoded picture buffer DPB, and the storage space may be a newly applied new storage area.

In this case, operations on the storage space for the virtual reference frame include:
1. applying for a new buffer as the storage space for the virtual reference frame;
2. adding the virtual reference frame in the storage space to the reference frame list through reference frame list management;
3. before writing a header file, releasing the buffer for the virtual reference frame, and restoring the reference frame list; and
4. processing a next frame and repeating the foregoing steps.

In a possible implementation, the virtual reference frame is stored in a specified space in the DPB. For example, the DPB may provide a storage space for 16 original reference frames. In addition, there is one or more remaining spaces. The virtual reference frame generated by the decoder may be stored in the one or more remaining spaces, and a virtual reference frame of a subsequent picture frame may overwrite previously stored content.

In this case, operations on the storage space for the virtual reference frame include:
1. extending and reusing the DPB, adding a reconstructed frame buffer, and reusing the buffer to copy the virtual reference frame to the buffer;
2. adding the virtual reference frame in the extended buffer to the reference frame list through reference frame management;
3. before writing a header file, releasing the buffer for the virtual reference frame, and restoring the reference frame list; and
4. processing a next frame, and repeating the foregoing steps until a virtual reference frame of a current frame overwrites a virtual reference frame of a previous frame.

Optionally, the virtual reference frame may be set as a short-term reference frame, for example, a POC value of the virtual reference frame is set to a POC value of a corresponding reconstructed frame. Alternatively, the virtual reference frame may be set as a long-term reference frame, for example, a POC value of the virtual reference frame is set to a POC value of a current to-be-decoded frame.

A difference between the second reference frame list and the first reference frame list lies in that the second reference frame list includes not only the original reference frame, but also the virtual reference frame as a factor. In this application, the decoder may obtain the second reference frame list by using any one of the following methods:
(1) virtual reference frame insertion: inserting the virtual reference frame into a first position (for example, a position *Iₙ*) in the first reference frame list to obtain the second reference frame list;
(2) merge reference frame insertion: inserting a merge reference frame into a first position in the first reference frame list to obtain the second reference frame list;
(3) virtual reference frame replacement: replacing a first reference frame in the first reference frame list with the virtual reference frame to obtain the second reference frame list; or
(4) merge reference frame replacement: replacing a first reference frame in the first reference frame list with a merge reference frame to obtain the second reference frame list.

The first reference frame is a reference frame at the first position in the first reference frame list. Reference frames in the first reference frame list may be marked with different indexes for distinguishing. Therefore, the index may also represent a position in the first reference frame list, for example, *Iₙ* may represent an index of the first reference frame. In this case, the position *Iₙ* may be a position (namely, the first position) of the first reference frame.

The merge reference frame is obtained based on the virtual reference frame and a second reference frame in the first reference frame list, and the second reference frame is a reference frame at a second position (for example, a position *Rₙ*) in the first reference frame list. *Rₙ* is an index of the second reference frame in the first reference frame list.

In the methods (1) to (4), an insertion method is used in the methods (1) and (2). A reference frame related to the virtual reference frame is inserted into the original first reference frame list, to obtain the second reference frame list. The inserted reference frame is a virtual reference frame in the method (1), or is a merge reference frame in the method (2).

Correspondingly, because the new reference frame is inserted into the position of the first reference frame, an index of at least one reference frame in the first reference frame list needs to be increased by 1, and a total quantity of reference frames in the first reference frame list needs to be increased by 1. The index of the at least one reference frame is greater than or equal to the index of the first reference frame. For example, if the new reference frame is inserted into the position *Iₙ* in the first reference frame list, an index of a reference frame that is originally at the position *Iₙ* and an index of a reference frame following the reference frame in the first reference frame list are separately increased by 1. For example, indexes *Iₙ*, *I*_{*n*+1}, *I*_{*n+*2}, ... are changed to *I*_{*n*+1}, *I*_{*n+*2}, *I*_{*n+*3}, ... after being increased by 1. In addition, the total quantity of reference frames in the first reference frame list is increased by 1, to obtain the second reference frame list. That is, each time a new reference frame is inserted, the total quantity of reference frames in the second reference frame list is 1 greater than that in the first reference frame list. In a possible implementation, when a new reference frame is inserted after the last reference frame in the first reference frame list, because positions of all reference frames in the first reference frame list are not affected, in this case, none of indexes of the other reference frames is changed, and only the total quantity of reference frames in the first reference frame list is increased by 1, to obtain the second reference frame list.

In the methods (1) to (4), a replacement method is used in the methods (3) and (4). A reference frame in the original first reference frame list is replaced with a reference frame related to the virtual reference frame, to obtain the second reference frame list. The reference frame for replacement is a virtual reference frame in the method (3), or is a merge reference frame in the method (4).

Correspondingly, because the first reference frame in the first reference frame list is replaced with a new reference frame, related information of the first reference frame needs to be recorded. The information may include a POC, pixel information, encoding and decoding information, related settings, and the like of the first reference frame, to obtain the first reference frame again based on the information when the first reference frame list is restored from the second reference frame list, and replace the virtual reference frame/merge reference frame in the second reference frame list with the first reference frame. In the first reference frame list, an index of an original reference frame remains unchanged, and the quantity of reference frames remains unchanged.

It should be noted that, in addition to the four methods, another method may further be used in this application to obtain the second reference frame list. This is not specifically limited herein.

In this application, which one of the methods (1) to (4) is used to obtain the second reference frame list may be determined by using the following several methods:

### 1. One flag

The flag may be referred to as a first flag. The first flag indicates whether the virtual reference frame is used to obtain the second reference frame list, and a method, for obtaining the second reference frame list, used when the virtual reference frame is used to obtain the second reference frame list. The first flag is carried in the bitstream as a syntax element, and may be obtained by parsing the bitstream by the decoder.
a. When the first flag is a first value, the method (1) is used to obtain the second reference frame list; or
b. when the first flag is a second value, the method (2) is used to obtain the second reference frame list; or
c. when the first flag is a third value, the method (3) is used to obtain the second reference frame list; or
d. when the first flag is a fourth value, the method (4) is used to obtain the second reference frame list.

In this method, the first flag is reused. When the first flag is a thirteenth value, it indicates that the virtual reference frame is not used to obtain the second reference frame list.

In this application, a syntax element (the first flag) may be added, and different values are assigned to the syntax element, so that the decoder can read the syntax element to determine which method is used to obtain the second reference frame list. In this case, the first flag may have five valid values, for example, 0 (the thirteenth value, indicating that the virtual reference frame is not used), 1 (the first value, indicating virtual reference frame insertion), 2 (the second value, indicating merge reference frame insertion), 3 (the third value, indicating virtual reference frame replacement), and 4 (the fourth value, indicating merge reference frame replacement).

### 2. Two flags

The two flags may be respectively referred to as a second flag and a third flag. The second flag indicates whether the virtual reference frame is used to obtain the second reference frame list, and that when the virtual reference frame is used to obtain the second reference frame list, an insertion or replacement method is used to obtain the second reference frame list; and the third flag indicates the virtual reference frame or the merge reference frame. The second flag and the third flag are carried in the bitstream as syntax elements, and may be obtained by parsing the bitstream by the decoder.
a. When the second flag is a fifth value and the third flag is a sixth value, the method (1) is used to obtain the second reference frame list; or
b. when the second flag is a fifth value and the third flag is a seventh value, the method (2) is used to obtain the second reference frame list; or
c. when the second flag is an eighth value and the third flag is a sixth value, the method (3) is used to obtain the second reference frame list; or
d. when the second flag is an eighth value and the third flag is a seventh value, the method (4) is used to obtain the second reference frame list.

In this method, the second flag is reused. When the second flag is a fourteenth value, it indicates that the virtual reference frame is not used to obtain the second reference frame list.

In this application, two syntax elements (the second flag and the third flag) may be added, and different values are assigned to the two syntax elements, so that the decoder can read the syntax elements to determine which method is used to obtain the second reference frame list. In this case, the second flag may have three valid values, for example, 0 (the fourteenth value, indicating that the virtual reference frame is not used), 1 (the fifth value, indicating insertion), and 2 (the eighth value, indicating replacement); and the third flag may have two valid values, for example, 0 (the sixth value, indicating the virtual reference frame) and 1 (the seventh value, indicating the merge reference frame).

### 3. Three flags

The three flags may be respectively referred to as a fourth flag, a fifth flag, and a sixth flag. The fourth flag indicates whether the virtual reference frame is used to obtain the second reference frame list, the fifth flag indicates that an insertion or replacement method is used to obtain the second reference frame list, and the sixth flag indicates the virtual reference frame or the merge reference frame. The fourth flag, the fifth flag, and the sixth flag are carried in the bitstream as syntax elements, and may be obtained by parsing the bitstream by the decoder.
a. When the fourth flag is a ninth value, the fifth flag is a tenth value, and the sixth flag is an eleventh value, the method (1) is used to obtain the second reference frame list; or
b. when the fourth flag is a ninth value, the fifth flag is a tenth value, and the sixth flag is a twelfth value, the method (2) is used to obtain the second reference frame list; or
c. when the fourth flag is a ninth value, the fifth flag is a thirteenth value, and the sixth flag is an eleventh value, the method (3) is used to obtain the second reference frame list; or
d. when the fourth flag is a ninth value, the fifth flag is a thirteenth value, and the sixth flag is a twelfth value, the method (4) is used to obtain the second reference frame list.

In this method, the fourth flag is reused. When the fourth flag is a fifteenth value, it indicates that the virtual reference frame is not used to obtain the second reference frame list.

In this application, three syntax elements (the fourth flag, the fifth flag, and the sixth flag) may be added, and different values are assigned to the three syntax elements, so that the decoder can read the syntax elements to determine which method is used to obtain the second reference frame list. In this case, the fourth flag may have two valid values, for example, 0 (the fifteenth value, indicating that the virtual reference frame is not used) and 1 (the ninth value, indicating that the virtual reference frame is used); the fifth flag may have two valid values, for example, 0 (the tenth value, indicating insertion) and 1 (the thirteenth value, indicating replacement); and the sixth flag may have two valid values, for example, 0 (the eleventh value, indicating the virtual reference frame) and 1 (the twelfth value, indicating the merge reference frame).

It should be noted that, in addition to the three methods, another method may further be used in this application. For example, the encoder side and the decoder side may preset, according to a preset rule, which method is used to obtain the second reference frame list, and the encoder and the decoder perform corresponding steps based on the setting. Therefore, how to determine which one of the methods (1) to (4) is used to obtain the second reference frame list is not specifically limited in embodiments of this application.

In this application, one or more virtual reference frames may be obtained for the corresponding current frame. Therefore, the process of obtaining the second reference frame list may be performed once for each virtual reference frame until all virtual reference frames of the current frame are added to the reference frame list. In addition, based on an inter prediction feature of the current frame, the virtual reference frame may also include a forward reference frame and a backward reference frame. Correspondingly, the first reference frame list and the second reference frame list respectively include a forward reference frame list and a backward reference frame list, and the virtual reference frame is added to the corresponding reference frame list through forward and backward classification.

Optionally, the newly added syntax element may be stored in the following layer or structure, which includes but is not limited to a sequence parameter set (Sequence Parameter Set, SPS), a video parameter set (Video Parameter Set, VPS), a picture parameter set (Picture Parameter Set, PPS), a picture header (Picture Header, PH), and a slice header (Slice Header, SH). This is not specifically limited in this application.

In a possible implementation, when determining, based on bitstream description information that is obtained from the bitstream through parsing, that the reference frame is a virtual reference frame, the decoder may select a corresponding virtual reference frame from the second reference frame list as the reference frame, and then determine a predicted picture based on the virtual reference frame.

In a possible implementation, when determining, based on bitstream description information that is obtained from the bitstream through parsing, that the reference frame is an original reference frame, the decoder may select a corresponding original reference frame from the second reference frame list as the reference frame, and then determine a predicted picture based on the original reference frame.

Due to motion of a camera and an object, a position of the same object in the current frame may be different from that in a previous frame. Motion information generated by a rendering engine can be used to accurately describe a coordinate correspondence (geometric relationship) between the two frames. Therefore, the virtual reference frame obtained based on the correspondence can more accurately predict the current frame than the original reference frame. Based on this, the virtual reference frame is introduced into the reference frame queue list as a factor. This can improve the inter coding performance, and further reduce the bit rate.

In a possible implementation, the second reference frame list may be restored to the first reference frame list.

In consideration of compatibility with various standards, after the reference frame list is changed to the second reference frame list, the decoder may further restore the second reference frame list to the first reference frame list. A restoration method may include the following two types:
1. When the insertion method in the methods (1) and (2) is used to obtain the second reference frame list, the inserted reference frame may be deleted, then an index of at least one reference frame in the second reference frame list is decreased by 1, and a total quantity of reference frames in the second reference frame list is decreased by 1. The index of the at least one reference frame is greater than or equal to an index of the inserted reference frame. For example, if the inserted reference frame is at a position *Iₙ* in the second reference frame list, an index of a reference frame that is originally at a position *I*_{*n*+1} in the second reference frame list and an index of a reference frame following the reference frame are separately decreased by 1. For example, indexes *I*_{*n*+1}, *I*_{*n+*2}, *I*_{*n+*3}, ... are changed to *Iₙ*, *I*_{*n*+1}, *I*_{*n+*2}, ... after being decreased by 1. In addition, the total quantity of reference frames in the second reference frame list is decreased by 1, to obtain the first reference frame list through restoration. In a possible implementation, when a deleted reference frame is the last reference frame in the second reference frame list, because a position of another reference frame in the second reference frame list is not affected, in this case, none of indexes of the other reference frames is changed, and only the total quantity of reference frames in the second reference frame list is decreased by 1, to obtain the first reference frame list through restoration.
2. When the replacement method in the methods (3) and (4) is used to obtain the second reference frame list, a replaced reference frame may be changed back to an original reference frame, and the original reference frame is previously recorded. Therefore, the original reference frame may be directly read from a corresponding storage space. In the second reference frame list, an index of the original reference frame remains unchanged, and the quantity of reference frames remains unchanged.

After the predicted picture is obtained, the residual picture obtained through decoding may be superimposed with the predicted picture, to obtain the reconstructed picture. Then, loop filtering may be performed on the reconstructed picture, to obtain a filtered reconstructed picture and output the filtered reconstructed picture to a memory.

According to a second aspect, this application provides a picture encoding method, including: obtaining a first reference frame list corresponding to a current frame; obtaining a virtual reference frame corresponding to the current frame; obtaining, based on the virtual reference frame and the first reference frame list, a second reference frame list corresponding to the current frame; obtaining, based on the second reference frame list, a predicted picture corresponding to the current frame; and predicting the current frame based on the predicted picture, to obtain a residual picture corresponding to the current frame.

In a possible implementation, obtaining, based on the virtual reference frame and the first reference frame list, the second reference frame list corresponding to the current frame includes any one of the following methods:
(1) inserting the virtual reference frame into a first position in the first reference frame list to obtain the second reference frame list;
(2) inserting a merge reference frame into a first position in the first reference frame list to obtain the second reference frame list;
(3) replacing a first reference frame in the first reference frame list with the virtual reference frame to obtain the second reference frame list; or
(4) replacing a first reference frame in the first reference frame list with a merge reference frame to obtain the second reference frame list.

The first reference frame is a reference frame at the first position in the first reference frame list, the merge reference frame is obtained based on the virtual reference frame and a second reference frame in the first reference frame list, and the second reference frame is a reference frame at a second position in the first reference frame list.

In a possible implementation, obtaining, based on the virtual reference frame and the first reference frame list, the second reference frame list corresponding to the current frame includes:
obtaining a first flag from a bitstream, where the first flag indicates whether the virtual reference frame is used to obtain the second reference frame list, and a method, for obtaining the second reference frame list, used when the virtual reference frame is used to obtain the second reference frame list; and
when the first flag is a first value, the method (1) is used to obtain the second reference frame list; or
when the first flag is a second value, the method (2) is used to obtain the second reference frame list; or
when the first flag is a third value, the method (3) is used to obtain the second reference frame list; or
when the first flag is a fourth value, the method (4) is used to obtain the second reference frame list.

In a possible implementation, obtaining, based on the virtual reference frame and the first reference frame list, the second reference frame list corresponding to the current frame includes:
obtaining a second flag and a third flag from a bitstream, where the second flag indicates whether the virtual reference frame is used to obtain the second reference frame list, and that when the virtual reference frame is used to obtain the second reference frame list, an insertion or replacement method is used to obtain the second reference frame list; and the third flag indicates the virtual reference frame or the merge reference frame; and
when the second flag is a fifth value and the third flag is a sixth value, the method (1) is used to obtain the second reference frame list; or
when the second flag is a fifth value and the third flag is a seventh value, the method (2) is used to obtain the second reference frame list; or
when the second flag is an eighth value and the third flag is a sixth value, the method (3) is used to obtain the second reference frame list; or
when the second flag is an eighth value and the third flag is a seventh value, the method (4) is used to obtain the second reference frame list.

In a possible implementation, obtaining, based on the virtual reference frame and the first reference frame list, the second reference frame list corresponding to the current frame includes:
obtaining a fourth flag, a fifth flag, and a sixth flag from a bitstream, where the fourth flag indicates whether the virtual reference frame is used to obtain the second reference frame list, the fifth flag indicates that an insertion or replacement method is used to obtain the second reference frame list, and the sixth flag indicates the virtual reference frame or the merge reference frame; and
when the fourth flag is a ninth value, the fifth flag is a tenth value, and the sixth flag is an eleventh value, the method (1) is used to obtain the second reference frame list; or
when the fourth flag is a ninth value, the fifth flag is a tenth value, and the sixth flag is a twelfth value, the method (2) is used to obtain the second reference frame list; or
when the fourth flag is a ninth value, the fifth flag is a thirteenth value, and the sixth flag is an eleventh value, the method (3) is used to obtain the second reference frame list; or
when the fourth flag is a ninth value, the fifth flag is a thirteenth value, and the sixth flag is a twelfth value, the method (4) is used to obtain the second reference frame list.

In a possible implementation, when the first flag is a thirteenth value, it indicates that the virtual reference frame is not used to obtain the second reference frame list.

In a possible implementation, when the second flag is a fourteenth value, it indicates that the virtual reference frame is not used to obtain the second reference frame list.

In a possible implementation, when the fourth flag is a fifteenth value, it indicates that the virtual reference frame is not used to obtain the second reference frame list.

In a possible implementation, the method further includes:
when the method (1) or the method (2) is used, separately increasing an index of at least one reference frame in the first reference frame list by 1, and increasing a total quantity of reference frames in the first reference frame list by 1, where the index of the at least one reference frame is greater than or equal to an index of the first reference frame.

In a possible implementation, the method further includes:
when the method (3) or the method (4) is used, recording related information of the first reference frame.

In a possible implementation, after obtaining, from the second reference frame list, the predicted picture corresponding to the current frame, the method further includes:
restoring the second reference frame list to the first reference frame list.

In a possible implementation, the virtual reference frame is stored not in a storage space of a decoded picture buffer DPB, or the virtual reference frame is stored in a specified space in the DPB.

In a possible implementation, a flag obtained from the bitstream is stored in a sequence parameter set SPS, a video parameter set VPS, a picture parameter set PPS, a picture header PH, or a slice header SH, and the flag includes the first flag, the second flag, the third flag, the fourth flag, the fifth flag, and the sixth flag.

In a possible implementation, obtaining the virtual reference frame corresponding to the current frame includes: obtaining rendering information from the bitstream, and obtaining the virtual reference frame based on a decoded reconstructed picture and the rendering information, where the rendering information is from a server.

The server may be a single server, or may be a server cluster. The server may be a cloud server, a physical server, a cluster server, or a high-defense server. The server may be a tower server, a blade server, a rack server, or a cabinet server. The server may be a general-purpose server or a dedicated server. A type of the server is not limited in this application.

In a possible implementation, the method is applied to a device-cloud collaboration system, the device-cloud collaboration system includes the server and a terminal device, the server includes an encoder, and the terminal device includes a decoder.

According to a third aspect, this application provides a picture decoding apparatus, including: a receiving module, configured to receive a bitstream; a prediction module, configured to: obtain, based on the bitstream, a residual picture and a first reference frame list that correspond to a current frame; obtain a virtual reference frame corresponding to the current frame; obtain, based on the virtual reference frame and the first reference frame list, a second reference frame list corresponding to the current frame; and obtain, based on the second reference frame list, a predicted picture corresponding to the current frame; and a reconstruction module, configured to perform reconstruction based on the predicted picture and the residual picture, to obtain a reconstructed picture of the current frame.

In a possible implementation, the prediction module is specifically configured to implement any one of the following methods:
(1) inserting the virtual reference frame into a first position in the first reference frame list to obtain the second reference frame list;
(2) inserting a merge reference frame into a first position in the first reference frame list to obtain the second reference frame list;
(3) replacing a first reference frame in the first reference frame list with the virtual reference frame to obtain the second reference frame list; or
(4) replacing a first reference frame in the first reference frame list with a merge reference frame to obtain the second reference frame list.

The first reference frame is a reference frame at the first position in the first reference frame list, the merge reference frame is obtained based on the virtual reference frame and a second reference frame in the first reference frame list, and the second reference frame is a reference frame at a second position in the first reference frame list.

In a possible implementation, the prediction module is specifically configured to: obtain a first flag from the bitstream, where the first flag indicates whether the virtual reference frame is used to obtain the second reference frame list, and a method, for obtaining the second reference frame list, used when the virtual reference frame is used to obtain the second reference frame list; and when the first flag is a first value, the method (1) is used to obtain the second reference frame list, or when the first flag is a second value, the method (2) is used to obtain the second reference frame list, or when the first flag is a third value, the method (3) is used to obtain the second reference frame list, or when the first flag is a fourth value, the method (4) is used to obtain the second reference frame list.

In a possible implementation, the prediction module is specifically configured to: obtain a second flag and a third flag from the bitstream, where the second flag indicates whether the virtual reference frame is used to obtain the second reference frame list, and that when the virtual reference frame is used to obtain the second reference frame list, an insertion or replacement method is used to obtain the second reference frame list, and the third flag indicates the virtual reference frame or the merge reference frame; and when the second flag is a fifth value and the third flag is a sixth value, the method (1) is used to obtain the second reference frame list, or when the second flag is a fifth value and the third flag is a seventh value, the method (2) is used to obtain the second reference frame list, or when the second flag is an eighth value and the third flag is a sixth value, the method (3) is used to obtain the second reference frame list, or when the second flag is an eighth value and the third flag is a seventh value, the method (4) is used to obtain the second reference frame list.

In a possible implementation, the prediction module is specifically configured to: obtain a fourth flag, a fifth flag, and a sixth flag from the bitstream, where the fourth flag indicates whether the virtual reference frame is used to obtain the second reference frame list, the fifth flag indicates that an insertion or replacement method is used to obtain the second reference frame list, and the sixth flag indicates the virtual reference frame or the merge reference frame; and when the fourth flag is a ninth value, the fifth flag is a tenth value, and the sixth flag is an eleventh value, the method (1) is used to obtain the second reference frame list, or when the fourth flag is a ninth value, the fifth flag is a tenth value, and the sixth flag is a twelfth value, the method (2) is used to obtain the second reference frame list, or when the fourth flag is a ninth value, the fifth flag is a thirteenth value, and the sixth flag is an eleventh value, the method (3) is used to obtain the second reference frame list, or when the fourth flag is a ninth value, the fifth flag is a thirteenth value, and the sixth flag is a twelfth value, the method (4) is used to obtain the second reference frame list.

In a possible implementation, when the first flag is a thirteenth value, it indicates that the virtual reference frame is not used to obtain the second reference frame list.

In a possible implementation, when the second flag is a fourteenth value, it indicates that the virtual reference frame is not used to obtain the second reference frame list.

In a possible implementation, when the fourth flag is a fifteenth value, it indicates that the virtual reference frame is not used to obtain the second reference frame list.

In a possible implementation, the prediction module is further configured to: when the method (1) or the method (2) is used, separately increase an index of at least one reference frame in the first reference frame list by 1, and increase a total quantity of reference frames in the first reference frame list by 1, where the index of the at least one reference frame is greater than or equal to an index of the first reference frame.

In a possible implementation, the prediction module is further configured to: when the method (3) or the method (4) is used, record related information of the first reference frame.

In a possible implementation, the prediction module is further configured to restore the second reference frame list to the first reference frame list.

In a possible implementation, the virtual reference frame is stored not in a storage space of a decoded picture buffer DPB, or the virtual reference frame is stored in a specified space in the DPB.

In a possible implementation, a flag obtained from the bitstream is stored in a sequence parameter set SPS, a video parameter set VPS, a picture parameter set PPS, a picture header PH, or a slice header SH, and the flag includes the first flag, the second flag, the third flag, the fourth flag, the fifth flag, and the sixth flag.

In a possible implementation, the prediction module is specifically configured to: obtain rendering information from the bitstream, and obtain the virtual reference frame based on a decoded reconstructed picture and the rendering information, where the rendering information is from a server.

In a possible implementation, the apparatus is used in a device-cloud collaboration system, the device-cloud collaboration system includes the server and a terminal device, the server includes an encoder, and the terminal device includes a decoder.

According to a fourth aspect, this application provides a bitstream generation method, where a bitstream is generated based on the virtual reference frame in any one of the implementations of the first aspect.

In a possible implementation, the bitstream includes a first flag, where the first flag indicates whether the virtual reference frame is used to obtain a second reference frame list, and a method, for obtaining the second reference frame list, used when the virtual reference frame is used to obtain the second reference frame list.

In a possible implementation, the bitstream includes a second flag and a third flag, where the second flag indicates whether the virtual reference frame is used to obtain a second reference frame list, and that when the virtual reference frame is used to obtain the second reference frame list, an insertion or replacement method is used to obtain the second reference frame list; and the third flag indicates the virtual reference frame or a merge reference frame.

In a possible implementation, the bitstream includes a fourth flag, a fifth flag, and a sixth flag, where the fourth flag indicates whether the virtual reference frame is used to obtain the second reference frame list, the fifth flag indicates that an insertion or replacement method is used to obtain the second reference frame list, and the sixth flag indicates the virtual reference frame or the merge reference frame.

According to a fifth aspect, this application provides a terminal device, including a memory and a processor, where the memory is coupled to the processor, the memory stores program instructions, and when the program instructions are executed by the processor, the terminal device is enabled to perform the method in any one of the implementations of the first aspect.

According to a sixth aspect, this application provides a chip, including one or more interface circuits and one or more processors, where the interface circuit is configured to: receive a signal from a memory of a terminal device, and send the signal to the processor, where the signal includes computer instructions stored in the memory, and when the processor executes the computer instructions, the terminal device is enabled to perform the method in any one of the implementations of the first aspect.

According to a seventh aspect, this application provides a computer-readable storage medium, where the computer-readable storage medium stores a computer program, and when the computer program is run on a computer or a processor, the computer or the processor is enabled to perform the method in any one of the implementations of the first aspect.

According to an eighth aspect, this application provides a computer program product. The computer program product includes computing instructions, and when the computing instructions are executed by a computer or a processor, steps of the method in any one of the implementations of the first aspect are performed.

According to a ninth aspect, this application provides a bitstream. The bitstream includes a first flag, where the first flag indicates whether a virtual reference frame is used to obtain a second reference frame list, and a method, for obtaining the second reference frame list, used when the virtual reference frame is used to obtain the second reference frame list.

When the first flag is a first value, a method (1) is used to obtain the second reference frame list; or
when the first flag is a second value, a method (2) is used to obtain the second reference frame list; or
when the first flag is a third value, a method (3) is used to obtain the second reference frame list; or
when the first flag is a fourth value, a method (4) is used to obtain the second reference frame list.

A method for obtaining the second reference frame list includes:
(1) inserting the virtual reference frame into a first position in a first reference frame list to obtain the second reference frame list;
(2) inserting a merge reference frame into a first position in a first reference frame list to obtain the second reference frame list;
(3) replacing a first reference frame in a first reference frame list with the virtual reference frame to obtain the second reference frame list; or
(4) replacing a first reference frame in a first reference frame list with a merge reference frame to obtain the second reference frame list.

In a possible implementation, when the first flag is 0, it indicates that the virtual reference frame is not used to obtain the second reference frame list.

According to a tenth aspect, this application provides a bitstream. The bitstream includes a second flag and a third flag, where the second flag indicates whether a virtual reference frame is used to obtain a second reference frame list, and that when the virtual reference frame is used to obtain the second reference frame list, an insertion or replacement method is used to obtain the second reference frame list; and the third flag indicates the virtual reference frame or a merge reference frame.

When the second flag is a fifth value and the third flag is a sixth value, a method (1) is used to obtain the second reference frame list; or
when the second flag is a fifth value and the third flag is a seventh value, a method (2) is used to obtain the second reference frame list; or
when the second flag is an eighth value and the third flag is a sixth value, a method (3) is used to obtain the second reference frame list; or
when the second flag is an eighth value and the third flag is a seventh value, a method (4) is used to obtain the second reference frame list.

A method for obtaining the second reference frame list includes:
(1) inserting the virtual reference frame into a first position in a first reference frame list to obtain the second reference frame list;
(2) inserting the merge reference frame into a first position in a first reference frame list to obtain the second reference frame list;
(3) replacing a first reference frame in a first reference frame list with the virtual reference frame to obtain the second reference frame list; or
(4) replacing a first reference frame in a first reference frame list with the merge reference frame to obtain the second reference frame list.

In a possible implementation, when the second flag is 0, it indicates that the virtual reference frame is not used to obtain the second reference frame list.

According to an eleventh aspect, this application provides a bitstream. The bitstream includes a fourth flag, a fifth flag, and a sixth flag, where the fourth flag indicates whether a virtual reference frame is used to obtain a second reference frame list, the fifth flag indicates that an insertion or replacement method is used to obtain the second reference frame list, and the sixth flag indicates the virtual reference frame or a merge reference frame.
when the fourth flag is a ninth value, the fifth flag is a tenth value, and the sixth flag is an eleventh value, a method (1) is used to obtain the second reference frame list; or
when the fourth flag is a ninth value, the fifth flag is a tenth value, and the sixth flag is a twelfth value, a method (2) is used to obtain the second reference frame list; or
when the fourth flag is a ninth value, the fifth flag is a thirteenth value, and the sixth flag is an eleventh value, a method (3) is used to obtain the second reference frame list; or
when the fourth flag is a ninth value, the fifth flag is a thirteenth value, and the sixth flag is a twelfth value, a method (4) is used to obtain the second reference frame list.

A method for obtaining the second reference frame list includes:
(1) inserting the virtual reference frame into a first position in a first reference frame list to obtain the second reference frame list;
(2) inserting the merge reference frame into a first position in a first reference frame list to obtain the second reference frame list;
(3) replacing a first reference frame in a first reference frame list with the virtual reference frame to obtain the second reference frame list; or
(4) replacing a first reference frame in a first reference frame list with the merge reference frame to obtain the second reference frame list.

In a possible implementation, when the fourth flag is 0, it indicates that the virtual reference frame is not used to obtain the second reference frame list.

According to a twelfth aspect, this application provides a bitstream storage apparatus. The apparatus includes a receiver and at least one storage medium. The receiver is configured to receive a bitstream. The at least one storage medium is configured to store the bitstream, where the bitstream is the bitstream recorded in any one of the possible implementations of the ninth aspect to the eleventh aspect, or is generated according to the method in any one of the implementations of the fourth aspect.

According to a thirteenth aspect, this application provides a bitstream transmission apparatus. The apparatus includes a transmitter and at least one storage medium. The at least one storage medium is configured to store a bitstream, where the bitstream is the bitstream recorded in any one of the possible implementations of the ninth aspect to the eleventh aspect, or is generated according to the method in any one of the implementations of the fourth aspect. The transmitter is configured to: obtain the bitstream from the storage medium, and send the bitstream to a device-side device through a transmission medium.

According to a fourteenth aspect, this application provides a bitstream distribution system. The system includes: at least one storage medium, configured to store at least one bitstream, where the at least one bitstream is the bitstream recorded in any one of the possible implementations of the ninth aspect to the eleventh aspect, or is generated according to the method in any one of the implementations of the fourth aspect; and a streaming media device, configured to: obtain a target bitstream from the at least one storage medium, and send the target bitstream to a device-side device, where the streaming media device includes a content server or a content distribution server.

### BRIEF DESCRIPTION OF DRAWINGS

FIG. 1a is a diagram of an example of an application scenario;
FIG. 1b is a diagram of an example of a device-cloud collaboration system;
FIG. 2a is a diagram of an example of an encoding process;
FIG. 2b is a diagram of an example of an encoding framework;
FIG. 3a is a diagram of an example of a decoding process;
FIG. 3b is a diagram of an example of a decoding framework;
FIG. 4 is a flowchart of exporting a virtual reference frame;
FIG. 5 is a flowchart of a process 500 of a picture decoding method according to an embodiment of this application;
FIG. 6 is a diagram of a decoding procedure of a decoder according to this application;
FIG. 7 is a diagram of reference frame list management according to this application;
FIG. 8 shows a statistical result of an inter coding mode;
FIG. 9 is a diagram of reference frame list management according to this application;
FIG. 10 is a diagram of reference frame list management according to this application;
FIG. 11 is a diagram of reference frame list management according to this application;
FIG. 12 is a diagram of a structure of a picture decoding apparatus 1200 according to this application; and
FIG. 13 is a block diagram of an apparatus according to this application.

### DESCRIPTION OF EMBODIMENTS

To make objectives, technical solutions, and advantages of this application clearer, the following clearly and completely describes technical solutions in this application with reference to accompanying drawings in this application. It is clear that the described embodiments are merely some rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, terms "first", "second", and the like are merely intended for distinguishing and description, and shall not be understood as an indication or implication of relative importance or an indication or implication of a sequence. In addition, the terms "include", "have", and any variant thereof are intended to cover non-exclusive inclusion, for example, include a series of steps or units. A method, system, product, or device is not necessarily limited to those steps or units expressly listed, but may include another step or unit not expressly listed or inherent to such a process, method, product, or device.

It should be understood that in this application, "at least one piece (item)" means one or more, and "a plurality of" means two or more. The term "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" usually indicates an "or" relationship between the associated objects. "At least one of the following items (pieces)" or a similar expression thereof means any combination of these items, including a singular item (piece) or any combination of plural items (pieces). For example, at least one item (piece) of a, b, or c may indicate a, b, c, "a and b", "a and c", "b and c", or "a, b, and c", where a, b, and c may be singular or plural.

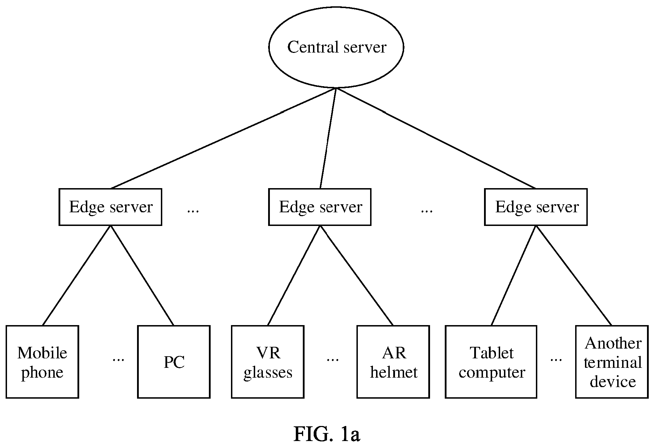

FIG. 1a is a diagram of an example of an application scenario. The application scenario shown in FIG. 1a is a device-cloud collaborative rendering scenario. This application may be applied to various device-cloud collaboration scenarios such as a cloud game and a VR or AR conference. This is not limited in this application. In this application, the cloud game is used as an example for description.

As shown in FIG. 1a, in a possible implementation, a terminal device like a mobile phone, a personal computer (Personal Computer, PC), VR glasses, an AR helmet, a tablet computer, or another terminal device may be included. A first rendering parameter is sent to a central server (for example, a game server) via an edge server. Next, the central server may perform rendering processing on a three-dimensional scene based on a rendering parameter (the rendering parameter may include only the first rendering parameter uploaded by the terminal device, or include the first rendering parameter uploaded by the terminal device and a second rendering parameter generated by the central server), to obtain a rendered picture (for example, a game picture). Then, the central server encodes the rendered picture based on a part (referred to as a first intermediate rendering result subsequently) of an intermediate rendering result generated in a rendering processing process, to obtain a bitstream, and distribute the bitstream to each terminal device via the edge server. Subsequently, the terminal device may perform rendering processing on the three-dimensional scene based on a rendering parameter (the rendering parameter includes the first rendering parameter and a fifth rendering parameter, the fifth rendering parameter is also generated by the terminal device, and the fifth rendering parameter may include a parameter that is the same as the second rendering parameter), and generate a first intermediate rendering result in a rendering processing process. Then, the terminal device decodes the bitstream based on the first intermediate rendering result, to obtain a reconstructed picture.

As shown in FIG. 1a, in a possible implementation, a terminal device like a mobile phone, a PC, VR glasses, an AR helmet, a tablet computer, or another terminal device may be included. A first rendering parameter is sent to a central server via an edge server. Next, the central server may perform rendering processing on a three-dimensional scene based on a rendering parameter (the rendering parameter may include only the first rendering parameter uploaded by the terminal device, or include the first rendering parameter uploaded by the terminal device and a second rendering parameter generated by the server), to obtain a rendered picture. Then, the central server encodes the rendered picture based on a first intermediate rendering result generated in a rendering processing process, and encodes a second intermediate rendering result (the second intermediate rendering result is a part of the first intermediate rendering result), to obtain a bitstream, and distribute the bitstream to each terminal device via the edge server. Subsequently, the terminal device may perform rendering processing on the three-dimensional scene based on a rendering parameter (the rendering parameter includes the first rendering parameter and a fifth rendering parameter), and generate a third intermediate rendering result (the third intermediate rendering result is a part, other than the first intermediate rendering result, in the second intermediate rendering result) in a rendering processing process. Then, the terminal device generates a first intermediate rendering result based on the second intermediate rendering result and the third intermediate rendering result, and decodes the bitstream based on the first intermediate rendering result, to obtain a reconstructed picture.

As shown in FIG. 1a, in a possible implementation, a terminal device like a mobile phone, a PC, VR glasses, an AR helmet, a tablet computer, or another terminal device may be included. A first rendering parameter is sent to a central server via an edge server. Next, the central server may perform rendering processing on a three-dimensional scene based on a rendering parameter (the rendering parameter includes the first rendering parameter uploaded by the terminal device and a second rendering parameter generated by the central server), to obtain a rendered picture. Then, the central server encodes the rendered picture based on a first intermediate rendering result generated in a rendering processing process, to obtain a bitstream and write a third rendering parameter (the third rendering parameter includes all parameters or some parameters in the second rendering parameter) into a bitstream. Then, the central server distributes the bitstream to each terminal device via the edge server. Subsequently, the terminal device may perform rendering processing on the three-dimensional scene based on a rendering parameter (when the third rendering parameter includes all parameters in the second rendering parameter, the rendering parameter may include the first rendering parameter and the third rendering parameter obtained from the bitstream through parsing; or when the third rendering parameter includes some parameters in the second rendering parameter, the rendering parameter may include the first rendering parameter, the third rendering parameter obtained from the bitstream through parsing, and a fourth rendering parameter generated by the terminal device, and the fourth rendering parameter is a parameter, other than the third rendering parameter, in the second rendering parameter), and generate a first intermediate rendering result in a rendering processing process. Then, the terminal device decodes the bitstream based on the first intermediate rendering result, to obtain a reconstructed picture.

As shown in FIG. 1a, in a possible implementation, a terminal device like a mobile phone, a PC, VR glasses, an AR helmet, a tablet computer, or another terminal device may be included. A first rendering parameter is sent to a central server via an edge server. Next, the central server may perform rendering processing on a three-dimensional scene based on a rendering parameter (including the first rendering parameter uploaded by the terminal device and a second rendering parameter generated by the central server), to obtain a rendered picture. Then, the central server encodes the rendered picture based on a first intermediate rendering result generated in a rendering processing process, and encodes a second intermediate rendering result, to obtain a bitstream and write a third rendering parameter into the bitstream. Then, the central server distributes the bitstream to each terminal device via the edge server. Subsequently, the terminal device may perform rendering processing on the three-dimensional scene based on a rendering parameter (when the third rendering parameter includes all parameters in the second rendering parameter, the rendering parameter may include the first rendering parameter and the third rendering parameter obtained from the bitstream through parsing; or when the third rendering parameter includes some parameters in the second rendering parameter, the rendering parameter may include the first rendering parameter, the third rendering parameter obtained from the bitstream through parsing, and a fourth rendering parameter generated by the terminal device), and generate a third intermediate rendering result in a rendering processing process. Then, the terminal device generates a first intermediate rendering result based on the second intermediate rendering result and the third intermediate rendering result, and decodes the bitstream based on the first intermediate rendering result, to obtain a reconstructed picture.

In this way, partial or all rendering is performed by the terminal device, and further, the server may not send an intermediate rendering result or send only a part of an intermediate rendering result to the terminal device. Therefore, in this application, an interaction delay can be reduced while it is ensured that bit rate overheads of a data stream transmitted by the server to the terminal device are effectively reduced. In addition, a correlation between an intermediate rendering result and the rendered picture is strong. Therefore, in this application, the rendered picture is encoded based on the intermediate rendering result, so that picture reconstruction quality can be ensured. In addition, a data amount of a rendering parameter is far less than a data amount of an intermediate rendering result. Therefore, even if the server in this application further sends the rendering parameter to the terminal device, bit rate overheads of a data stream transmitted by the server to the terminal device in this application are less than bit rate overheads of a transmitted data stream in the conventional technology.

For example, the rendering parameter may be all parameters that are input into a graphics rendering engine and that are required by the graphics rendering engine for rendering processing; and may include various parameters for rendering, position vectors and color vectors of all light sources, a position vector of a player or an observer, information such as a sampling manner of each texture and position coordinates of an object in each scene, a motion track of a moving object, a skeletal animation parameter, and the like. This is not limited in this application. The first rendering parameter and the second rendering parameter may form the rendering parameter (namely, all parameters that are input into the graphics rendering engine and that are required by the graphics rendering engine for rendering). It should be noted that a type of a parameter included in the fifth rendering parameter generated by the terminal device is the same as a type of a parameter included in the second rendering parameter generated by the central server, and precision of the parameter included in the fifth rendering parameter is less than or equal to precision of the parameter included in the second rendering parameter.

For example, the intermediate rendering result may be intermediate data that is used to generate a to-be-displayed picture/video and that is generated by the graphics rendering engine in a process of generating the to-be-displayed picture (namely, the rendered picture)/video (namely, a rendered video). For example, the intermediate rendering result may include but is not limited to a computer graphics motion vector (Computer Graphics Motion Vector, CGMV), an intermediate rendered picture (the intermediate rendered picture is a picture generated before a final rendered picture (namely, the rendered picture) is generated, computational complexity of the intermediate rendered picture is lower than computational complexity of the rendered picture, and the intermediate rendered picture may be, for example, an intermediate rendered picture on which indirect illumination rendering is not performed, an intermediate rendered picture on which specular reflection processing is not performed, or an intermediate rendered picture on which highlight processing is not performed), a position map (position map), a normal map (normal map), an albedo map (albedo map), a specular intensity map (specular intensity map), a mesh flag (Mesh ID), a material ID (Material ID) (each material map corresponds to one material ID), a render ID (render ID) (each object (or one three-dimensional object model) corresponds to one render ID), depth information, and the like. This is not limited in this application. The first intermediate rendering result is a part of all intermediate rendering results generated in the rendering processing process, and the second intermediate rendering result and the third intermediate rendering result may form the first intermediate rendering result. It should be noted that a type of an intermediate result included in the first intermediate rendering result generated by the terminal device is the same as a type of an intermediate result included in the first intermediate rendering result generated by the central server, and precision of the intermediate result included in the first intermediate rendering result generated by the terminal device is less than or equal to precision of the intermediate result included in the first intermediate rendering result generated by the central server.

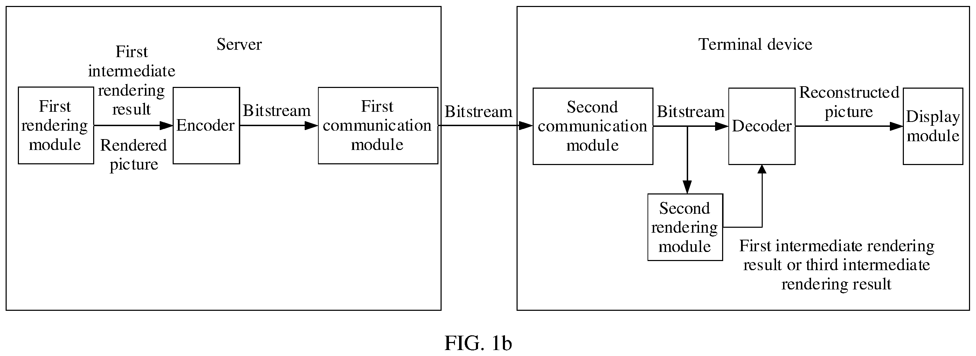

Based on the application scenario in FIG. 1a, this application provides a device-cloud collaboration system that may be shown in FIG. 1b.

FIG. 1b is a diagram of an example of a device-cloud collaboration system. The device-cloud collaboration system shown in FIG. 1b may include a server and a terminal device.

As shown in FIG. 1b, for example, the server may be the central server in FIG. 1a, and the server may be a single server, or may be a server cluster. This is not limited in this application.

For example, the server may include a first rendering module, an encoder, and a first communication module. It should be understood that FIG. 1b is merely an example of this application. The server in this application may include more or fewer modules than those shown in FIG. 1b. This is not limited in this application.

For example, the first rendering module may be configured to perform rendering processing on a three-dimensional scene based on a rendering parameter, to obtain a rendered picture and an intermediate rendering result.

For example, the encoder may be configured to: encode the rendered picture based on a first intermediate rendering result, encode a second intermediate rendering result, and write a second rendering parameter into a bitstream.

For example, the first communication module may be configured to communicate with another electronic device, for example, may send, to the terminal device, the bitstream output by the encoder.

For example, the terminal device includes but is not limited to a personal computer, a computer workstation, a smartphone, a tablet computer, a server, a smart camera, an intelligent vehicle, another type of cellular phone, a media consumption device, a wearable device (for example, a VR or AR helmet or VR glasses), a set-top box, a game console, and the like.

Still as shown in FIG. 1b, for example, the terminal device may include a second communication module, a second rendering module, a decoder, and a display module. It should be understood that FIG. 1b is merely an example of this application. The terminal device in this application may include more or fewer modules than those shown in FIG. 1b. This is not limited in this application.

For example, the second communication module may be configured to communicate with another electronic device, for example, receive the bitstream sent by the server.

For example, the second rendering module may be configured to perform rendering processing on a three-dimensional scene based on a rendering parameter, to obtain a first intermediate rendering result or a third intermediate rendering result. It should be understood that, the second rendering module may also generate a rendered picture, but the rendered picture is not used for displaying by the subsequent display module.

For example, the decoder may be configured to decode the bitstream based on the first intermediate rendering result, to obtain a reconstructed picture.

For example, the display module may be configured to display the reconstructed picture.

It should be understood that a video coding standard used by the encoder and the decoder is not limited in this application. For example, the video coding standard may include but is not limited to H.264/AVC (Advanced Video Coding, advanced video coding), H.265/HEVC (High Efficiency Video Coding, high efficiency video coding), H.266/VVC (Versatile Video Coding, versatile video coding), AV1 (AOMedia Video 1, where "AOMedia" is a video coding standard developed by the Alliance for Open Media), and extended standards of these video coding standards. In addition, the video coding standard may further include a new video coding standard and an extended standard that are generated with development of video coding technologies.

The following describes an encoding and decoding process based on FIG. 1a and FIG. 1b.

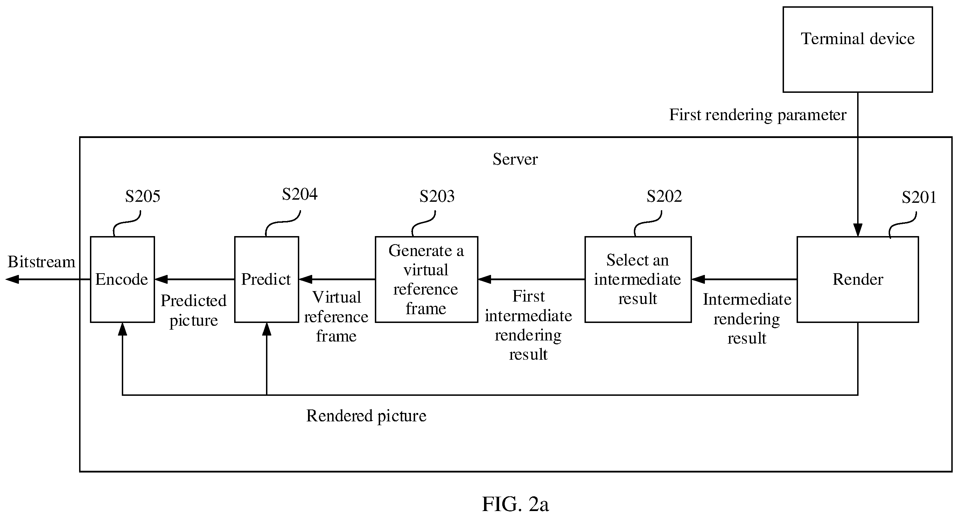

FIG. 2a is a diagram of an example of an encoding process. In the embodiment in FIG. 2a, a server neither sends a first intermediate rendering result to a terminal device, nor sends a second rendering parameter to the terminal device. In the embodiment in FIG. 2a, an example in which one frame of rendered picture is encoded is used for description.

S201: The server performs rendering processing on a three-dimensional scene based on a rendering parameter, to obtain a rendered picture, where the rendering parameter includes a first rendering parameter obtained from the terminal device.

For example, the server may obtain the rendering parameter, and then input the rendering parameter into a graphics rendering engine. The graphics rendering engine performs rendering processing on the three-dimensional scene based on the rendering parameter, to obtain the rendered picture. The graphics rendering engine belongs to the first rendering module in FIG. 1b.

For example, the server may obtain the first rendering parameter (the first rendering parameter is generated by the terminal device) from the terminal device. In a possible implementation, when the first rendering parameter generated by the terminal device is all parameters required by the graphics rendering engine for rendering processing, the server may determine the first rendering parameter as the rendering parameter. That is, the rendering parameter obtained by the server may include only the first rendering parameter. In a possible implementation, when the first rendering parameter generated by the terminal device is some parameters required by the graphics rendering engine for rendering processing, the server may further generate the second rendering parameter, and then determine the first rendering parameter and the second rendering parameter as the rendering parameter. That is, the rendering parameter obtained by the server may include the first rendering parameter and the second rendering parameter. The first rendering parameter and the second rendering parameter are specifically described in a subsequent embodiment.

It should be noted that the server may obtain the first rendering parameter from the terminal device based on a preset periodicity. The preset periodicity may be set based on a requirement. This is not limited in this application. It should be understood that the first rendering parameter obtained by the server from the terminal device each time may be used to render one or more frames of pictures.

For example, a rendering processing process of the graphics rendering engine may be as follows: An image engine may perform geometric transform, projection transform, perspective transform, and window clipping on a three-dimensional object model in the three-dimensional scene based on the input rendering parameter, and then generate the rendered picture based on obtained material and brightness information.

S202: The server selects a first intermediate rendering result based on an intermediate rendering result generated in the rendering processing process.

For example, the graphics rendering engine in the first rendering module generates the intermediate rendering result in the rendering processing process (the rendering processing process is a time period between a moment at which the graphics rendering engine obtains the rendering parameter and a moment at which the rendered picture is obtained), and may select the first intermediate rendering result from the intermediate rendering result. Subsequently, the rendered picture may be encoded based on the first intermediate rendering result.

For example, some intermediate rendering results may be selected from the intermediate rendering result as the first intermediate rendering result. For example, in this application, a manner of encoding the rendered picture based on the first intermediate rendering result may be: generating a virtual reference frame based on the first intermediate rendering result, and then encoding the rendered picture based on the virtual reference frame. Further, some intermediate rendering results that may be used to generate the virtual reference frame may be selected from the intermediate rendering result as the first intermediate rendering result. For example, a CGMV, an intermediate rendered picture, and the like are selected as the first intermediate rendering result. This is not limited in this application.

S203: The server generates the virtual reference frame based on the first intermediate rendering result.

For example, the virtual reference frame is a reference frame generated based on prior information. The prior information includes decoded information inside an encoder and information other than a to-be-encoded video/picture. The virtual reference frame may be used as supplementary information for inter coding, to further remove video time domain redundancy.

For example, different first intermediate rendering results correspond to different types. For example, a type of the CGMV is a motion vector type, and a type of the intermediate rendered picture is a picture type. In a possible implementation, a type of the first intermediate rendering result may be determined, and then the virtual reference frame is generated based on the first intermediate rendering result and the type of the first intermediate rendering result. Specifically, for different types of first intermediate rendering results, a manner of generating the virtual reference frame is described below.

It should be noted that S201 and S202 may be performed by the first rendering module in FIG. 1b, and S203 may be performed by the first rendering module in FIG. 1b, or may be performed by a module in the server other than the module shown in FIG. 1b. This is not limited in this application (an example in which the first rendering module performs S203 is used for description in this application). S204 and S205 may be performed by the encoder in FIG. 1b.

S204: The server predicts the rendered picture based on the virtual reference frame, to obtain a predicted picture.

S205: The server encodes a residual picture between the predicted picture and the rendered picture, and writes encoded data of the residual picture into a bitstream, where the bitstream does not include encoded data of the first intermediate rendering result.

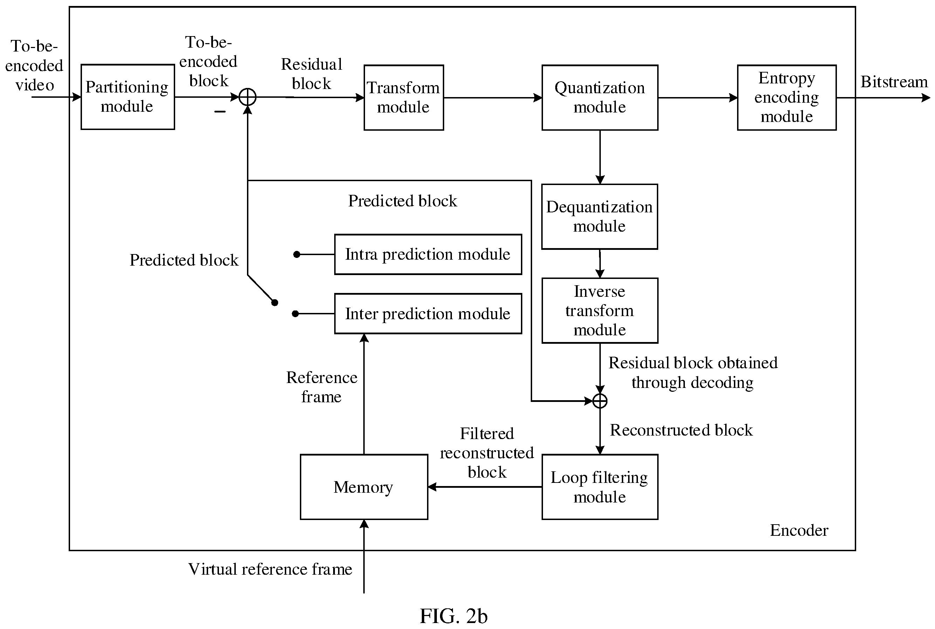

FIG. 2b is a diagram of an example of an encoding framework. An encoding framework of the encoder in FIG. 1b is shown in the embodiment in FIG. 2b. A to-be-encoded video in FIG. 2b is a rendered video, and may include a plurality of frames of rendered pictures.

As shown in FIG. 2b, for example, the encoder may include a partitioning module, an intra prediction module, an inter prediction module, a transform module, a quantization module, an entropy encoding module, a dequantization module, an inverse transform module, a loop filtering module, and a memory.

For example, after generating a virtual reference frame, a first rendering module may insert the virtual reference frame into a reference frame list in the memory, and increase a length of the reference frame list by 1.

Still as shown in FIG. 2b, an encoding process of the encoder may be as follows: After obtaining the to-be-encoded video, the partitioning module of the encoder may partition each frame of rendered picture in the to-be-encoded video, to obtain a to-be-encoded block. For each to-be-encoded block, a decision module (not shown in FIG. 2b) may determine to perform inter prediction or intra prediction on the to-be-encoded block.

When intra prediction is determined, the intra prediction module may perform intra prediction, to determine a predicted block corresponding to the to-be-encoded block. After the predicted block is obtained, a residual block between the to-be-encoded block and the predicted block may be determined. Then, the residual block is input into the transform module, and the transform module transforms the residual block, to obtain a transform result and output the transform result to the quantization module. Then, the quantization module may quantize the transform result, to obtain a quantization result, and output the quantization result to the entropy encoding module. Then, the entropy encoding module may perform entropy encoding on the quantization result, to obtain encoded data of the residual block, and write the encoded data of the residual block into a bitstream.

For example, the quantization module may further output the quantization result to the dequantization module, and the dequantization module performs dequantization, to obtain the dequantization result, and output the dequantization result to the inverse transform module. Next, the inverse transform module performs inverse transform on the dequantization result, to obtain a residual block obtained through decoding. Then, the residual block obtained through decoding may be superimposed with the predicted block output by the intra prediction module, to obtain a reconstructed block. Subsequently, the reconstructed block is input into the loop filtering module, and the loop filtering module performs loop filtering on the reconstructed block, to obtain a filtered reconstructed block and output the filtered reconstructed block to the memory. (After obtaining the filtered reconstructed block, the loop filtering module may splice the filtered reconstructed block at a corresponding position of a to-be-reconstructed picture; and after one frame of reconstructed picture is obtained, the reconstructed picture may be output to the memory for storage.)

When inter prediction is determined, the inter prediction module may perform inter prediction, to determine a predicted block corresponding to the to-be-encoded block.

In a possible implementation, the inter prediction module may select the virtual reference frame from the reference frame list in the memory as a reference frame of the rendered picture. For a to-be-encoded block in the rendered picture, a matched predicted block (namely, the predicted picture) may be searched for from the virtual reference frame.

In a possible implementation, the inter prediction module may use both the virtual reference frame and an original reference frame in the reference frame list in the memory as candidate reference frames of the rendered picture, where the original reference frame is a reconstructed picture. For the to-be-encoded block in the rendered picture, inter prediction may be performed based on a plurality of candidate reference frames, to determine a plurality of predicted blocks. One predicted block is correspondingly determined for one candidate reference frame. An optimal predicted block may be selected from the plurality of predicted blocks (for example, a predicted block with a minimum rate-distortion cost may be determined as the optimal predicted block (namely, the predicted picture) by using the rate-distortion cost as an evaluation standard).

After the predicted block is obtained, a residual block (namely, the residual picture) between the to-be-encoded block and the predicted block may be determined. Then, the residual block is input into the transform module, and the transform module transforms the residual block, to obtain a transform result and output the transform result to the quantization module. Then, the quantization module may quantize the transform result, to obtain a quantization result, and output the quantization result to the entropy encoding module. Then, the entropy encoding module may perform entropy encoding on the quantization result, to obtain encoded data of the residual block, and write the encoded data of the residual block into a bitstream (namely, the bitstream obtained in S205).

For example, the quantization module may further output the quantization result to the dequantization module, and the dequantization module performs dequantization, to obtain the dequantization result, and output the dequantization result to the inverse transform module. Next, the inverse transform module performs inverse transform on the dequantization result, to obtain a residual block obtained through decoding. Then, the decoded residual block may be superimposed with the predicted block output by the intra prediction module, to obtain a reconstructed block. Subsequently, the reconstructed block is input into the loop filtering module, and the loop filtering module performs loop filtering on the reconstructed block, to obtain a filtered reconstructed block and output the filtered reconstructed block to the memory. (After obtaining the filtered reconstructed block, the loop filtering module may splice the filtered reconstructed block at a corresponding position of a to-be-reconstructed picture; and after one frame of reconstructed picture is obtained, the reconstructed picture may be output to the memory for storage.)

For example, after the rendered picture is encoded, the virtual reference frame in the reference frame list in the memory may be deleted, and the length of the reference frame list is decreased by 1, to avoid an excessively long reference frame list and reduction of encoding efficiency.

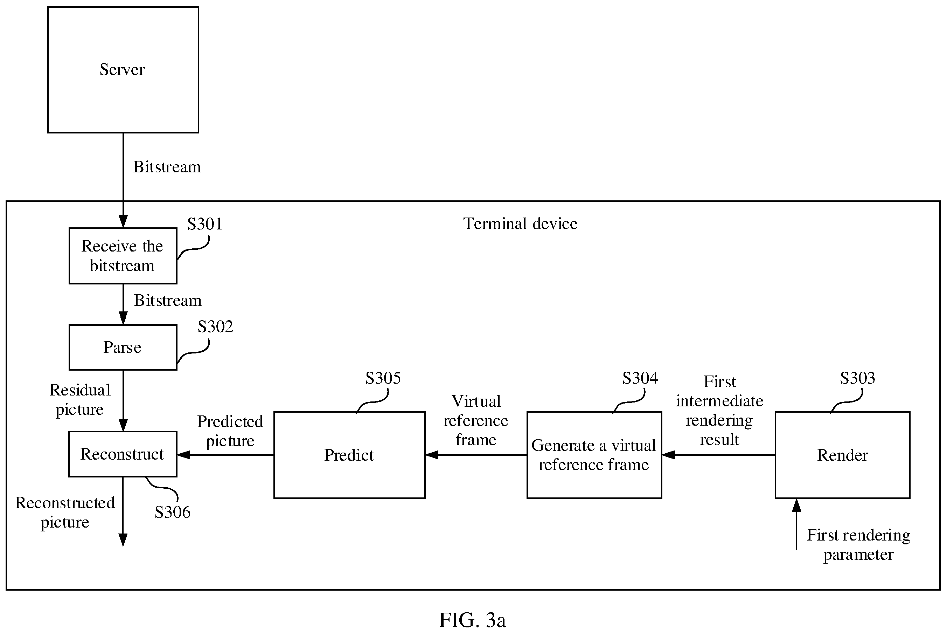

FIG. 3a is a diagram of an example of a decoding process. FIG. 3a shows a decoding process corresponding to FIG. 2a. In the embodiment in FIG. 3a, a terminal device performs rendering processing based on a locally generated rendering parameter, and generates a first intermediate rendering result. In the embodiment in FIG. 3a, an example in which one frame of picture is decoded is used for description.

S301: The terminal device receives a bitstream.

For example, the terminal device may receive the bitstream after a server sends the bitstream.

S302: The terminal device parses the bitstream, to obtain a parsing result, where the parsing result includes a residual picture corresponding to a current frame.

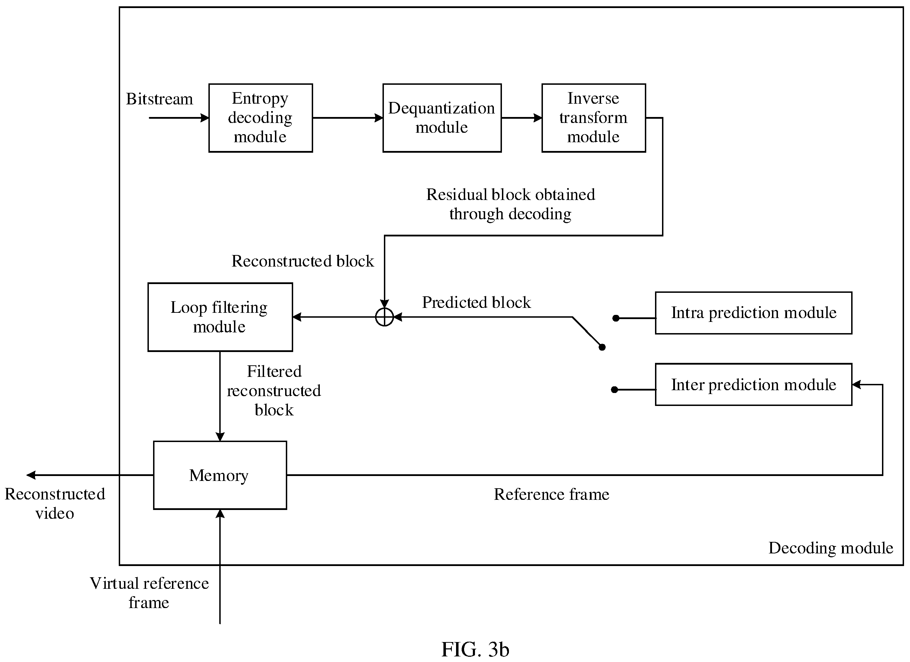

FIG. 3b is a diagram of an example of a decoding framework. A decoding framework of the decoder in FIG. 1b is shown in the embodiment in FIG. 3b.

As shown in FIG. 3b, for example, the decoder may include an entropy decoding module, a dequantization module, an inverse transform module, an intra prediction module, an inter prediction module, a loop filtering module, and a memory.

For example, after receiving the bitstream, the terminal device may parse the bitstream, to obtain the parsing result. A parsing process may be as follows: Encoded data of a residual block is extracted from the bitstream, and then the encoded data of the residual block is input into the entropy decoding module. The entropy decoding module performs entropy decoding on the encoded data of the residual block, to obtain entropy decoded data. Next, the entropy decoded data may be input into the dequantization module, and the dequantization module performs dequantization, to obtain dequantized data, and input the dequantized data into the inverse transform module. Then, the inverse transform module performs inverse transform on the dequantized data, to obtain a residual block (namely, the residual picture corresponding to the current frame in S302) obtained through decoding.

It should be understood that, when an encoder side performs lossy encoding on the residual block, a residual block obtained by a decoder side through parsing is different from the residual block encoded by the encoder side. When an encoder side performs lossless encoding on the residual block, a residual block obtained by a decoder side through parsing is the same as the residual block encoded by the encoder side.

It should be noted that bitstream description information for describing the bitstream may further be extracted from the bitstream. In this case, operations such as entropy decoding, dequantization, and inverse transform do not need to be performed on the bitstream description information. The bitstream description information may be used for a subsequent decoding process.

S303: The terminal device performs rendering processing on a three-dimensional scene based on a rendering parameter corresponding to the current frame, and generates the first intermediate rendering result in a rendering processing process, where the rendering parameter includes a first rendering parameter generated by the terminal device.

For example, after the residual picture corresponding to the current frame is obtained through parsing, a second rendering module (which may be a graphics rendering engine included in the second rendering module) may perform rendering processing on the three-dimensional scene based on the rendering parameter corresponding to the current frame.

For example, when the first rendering parameter uploaded by the terminal device to the server is all parameters required by the graphics rendering engine for rendering processing, the second rendering module may perform rendering processing on the three-dimensional scene based on the first rendering parameter corresponding to the current frame. When the first rendering parameter uploaded by the terminal device is some parameters required by the graphics rendering engine for rendering processing, the terminal device may further generate a fifth rendering parameter, and then, the second rendering module may perform rendering processing on the three-dimensional scene based on the first rendering parameter corresponding to the current frame and the fifth rendering parameter.

It should be noted that a type of a parameter included in the fifth rendering parameter generated by the terminal device is the same as a type of a parameter included in a second rendering parameter generated by a central server, and precision of the parameter included in the fifth rendering parameter is less than or equal to precision of the parameter included in the second rendering parameter.

It should be noted that a type of an intermediate result included in the first intermediate rendering result generated by the terminal device is the same as a type of an intermediate result included in the first intermediate rendering result generated by the server, and precision of the intermediate result included in the first intermediate rendering result generated by the terminal device is less than or equal to precision of the intermediate result included in the first intermediate rendering result generated by the server.

It should be noted that a rendered picture can also be obtained when the graphics rendering engine of the terminal device performs rendering processing. Because computational power of the terminal device is lower than computational power of the server, picture quality (the picture quality may include subjective quality and objective quality (the objective quality is, for example, rate-distortion performance or a PSNR (Peak Signal to Noise Ratio, peak signal to noise ratio))) of the rendered picture obtained by performing rendering processing by the graphics rendering engine of the terminal device is lower than picture quality of a rendered picture obtained by performing rendering processing by a graphics rendering engine of the server. Therefore, the terminal device may not display the rendered picture obtained by performing rendering processing by the graphics rendering engine of the terminal device, but display a reconstructed picture obtained by decoding the bitstream.

S304: The terminal device generates a virtual reference frame based on the first intermediate rendering result.

For example, for S304, refer to the descriptions of S203. Details are not described herein again.

For example, after generating the virtual reference frame, the terminal device may reconstruct, based on the virtual reference frame, the residual picture corresponding to the current frame, to obtain a reconstructed picture. Picture quality of the reconstructed picture is higher than that of the rendered picture obtained by performing rendering processing by the graphics rendering engine of the terminal device. Subsequently, the terminal device may display the reconstructed picture.

It should be noted that S301 to S303 may be performed by the second rendering module in the terminal device, and S304 may be performed by the second rendering module in the terminal device, or may be performed by a module in the terminal device other than the module shown in FIG. 1b (an example in which the second rendering module performs S304 is used for description in this application). S305 and S306 may be performed by the decoder in FIG. 1b.

S305: The terminal device predicts the current frame based on the virtual reference frame, to obtain a predicted picture.

S306: The terminal device performs reconstruction based on the predicted picture and the residual picture, to obtain the reconstructed picture of the current frame.

As shown in FIG. 3b again, for example, after generating the virtual reference frame, the second rendering module may insert the virtual reference frame into a reference frame list in the memory, and increase a length of the reference frame list by 1.

As shown in FIG. 3b again, for example, when intra prediction is determined based on the bitstream description information obtained from the bitstream through parsing, the intra prediction module may perform intra prediction, to obtain a predicted block. Then, the residual block obtained through decoding may be superimposed with the predicted block, to obtain a reconstructed block. Then, loop filtering may be performed on the reconstructed block, to obtain a filtered reconstructed block and output the filtered reconstructed block to the memory. (After obtaining the filtered reconstructed block, the loop filtering module may splice the filtered reconstructed block at a corresponding position of a to-be-reconstructed picture; and after one frame of reconstructed picture is obtained, the reconstructed picture may be output to the memory for storage.)

As shown in FIG. 3b again, for example, when inter prediction is determined based on the bitstream description information obtained from the bitstream through parsing, the inter prediction module may perform inter prediction, to obtain a predicted block (namely, the predicted picture in S305).

In a possible implementation, when the inter prediction module determines, based on the bitstream description information obtained from the bitstream through parsing, that a reference frame is a virtual reference frame, the inter prediction module may select a corresponding virtual reference frame from the reference frame list in the memory as a reference frame, and then determine a predicted block based on the virtual reference frame.

In a possible implementation, when the inter prediction module determines, based on the bitstream description information obtained from the bitstream through parsing, that a reference frame is an original reference frame, the inter prediction module may select a corresponding original reference frame from the reference frame list in the memory as a reference frame, and then determine a predicted block based on the original reference frame.

After the predicted block is obtained, the residual block obtained through decoding may be superimposed with the predicted block, to obtain a reconstructed block. Then, loop filtering may be performed on the reconstructed block, to obtain a filtered reconstructed block and output the filtered reconstructed block to the memory. (After obtaining the filtered reconstructed block, the loop filtering module may splice the filtered reconstructed block at a corresponding position of a to-be-reconstructed picture; and after one frame of reconstructed picture is obtained, the reconstructed picture may be output to the memory.)

It should be understood that the terminal device may further generate the bitstream based on the first rendering parameter, and then send the bitstream to the server based on a preset periodicity. In this way, the server may obtain the first rendering parameter. In addition, because a data amount of the first rendering parameter is small, the terminal device may encode the first rendering parameter, write encoded data of the first rendering parameter into the bitstream, and then send the bitstream to the server. Alternatively, the terminal device may not encode the first rendering parameter, but directly write the first rendering parameter into the bitstream, and send the bitstream to the server. This is not limited in this application.

In this way, in this application, all rendering is performed by the terminal device, and further, the server may not send an intermediate rendering result to the terminal device. Therefore, in this application, an interaction delay can be reduced while it is ensured that bit rate overheads of a data stream transmitted by the server to the terminal device are effectively reduced. In addition, a correlation between an intermediate rendering result and the rendered picture is strong. Therefore, in this application, the rendered picture is encoded based on the intermediate rendering result, so that picture reconstruction quality can be ensured.

Based on the foregoing content, a keyword in this application is first described.

### Virtual reference frame

Video coding (video coding used in this specification may represent video encoding or video decoding) usually indicates processing of a sequence of pictures that form a video or a video sequence. In the field of video coding, the terms "picture (picture)", "frame (frame)", or "image (image)" may be used as synonyms. A video sequence includes a series of pictures (pictures), the picture is further split into slices (slices), and the slice is further split into blocks (blocks). Video coding may encoding/decoding performed on a picture, slice, or block basis. Therefore, based on a processing unit of video coding, a virtual reference frame may also be replaced with a virtual reference block.

A standard video encoder/decoder usually uses an input/reconstructed video to generate a reference frame. In this application, the reference frame is referred to as an original reference frame. The virtual reference frame is a reference frame obtained based on prior information. The prior information includes decoded information inside an encoder/decoder and information other than a to-be-encoded/decoded video. The virtual reference frame may be used as supplementary information for inter prediction, and is used in a motion estimation and motion compensation process, to further remove video time domain redundancy.

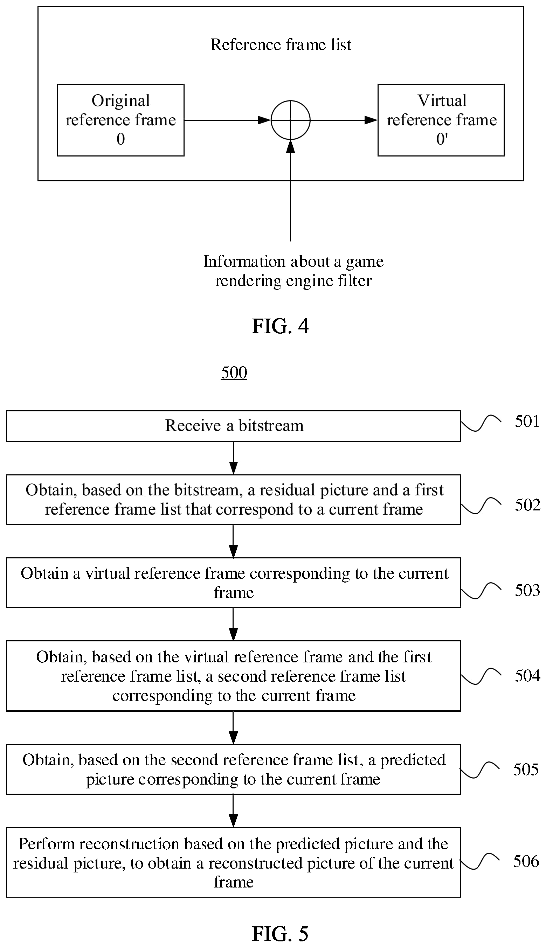

For example, FIG. 4 is a flowchart of exporting a virtual reference frame. As shown in FIG. 4, the virtual reference frame is exported based on decoded information for inter prediction. In video coding, a reference frame used for motion estimation is stored in a decoded picture buffer (Decoded Picture Buffer, DPB), and a current frame may have a forward frame and/or a backward frame, and one or more reference frames. The virtual reference frame is generated by using one or more reference frames whose picture order counts (Picture Order Count, POC) are close to the current frame. For example, an original reference frame of the current frame is 0, a virtual reference frame 0' is generated via a game rendering engine filter, and the virtual reference frame 0' may be placed in the DPB for a motion estimation or motion compensation process.

In conventional video coding, a decoded picture is referenced in an inter prediction mode, and the decoded picture is placed in a reference frame list for management. In this application, according to a standard reference frame list management method, the virtual reference frame is introduced, and a reference frame list management rule is improved. This can effectively improve encoding and decoding performance and efficiency on a rendered video.

FIG. 5 is a flowchart of a process 500 of a picture decoding method according to an embodiment of this application. The process 500 may be performed by the foregoing terminal device (decoder side) that may be specifically a video decoder (referred to as a decoder for short) at the decoder side; and is applicable to an inter prediction procedure. The process 500 is described as a series of steps or operations. It should be understood that the steps or operations of the process 500 may be performed in various sequences and/or simultaneously, are not limited to an execution sequence shown in FIG. 5. The process 500 may include the following steps.

Step 501: Receive a bitstream.

Step 502: Obtain, based on the bitstream, a residual picture and a first reference frame list that correspond to a current frame.

Refer to S302 in the embodiment shown in FIG. 3a. The decoder may obtain the residual picture of the current frame by parsing the bitstream. In addition, when performing inter prediction on the current frame, an encoder side (for example, a server in a device-cloud collaboration system) creates a reference frame list for the current frame according to a specific rule, and sets a flag for an original reference frame in the list. The flag may be transmitted to the decoder as a syntax element along with the bitstream. Based on this, when processing the current frame, the decoder may obtain the flag by parsing the bitstream, and then add a reconstructed picture with the flag to the reference frame list of the current frame. In this case, the reference frame list includes only the reconstructed picture, and may be referred to as the first reference frame list.

Step 503: Obtain a virtual reference frame corresponding to the current frame.

In consideration of diversity of video pictures, for some picture frames, good encoding/decoding effect may be obtained by using an original reference frame, and for some picture frames, good encoding/decoding effect may be obtained only by using a virtual reference frame. Therefore, in video coding in this application, a solution in which the original reference frame is used may be combined with a solution in which the virtual reference frame is used. For example, a syntax element is added, and a value is assigned to the syntax element, to indicate whether the decoder uses the virtual reference frame; or the decoder determines, according to a preset rule, whether to use the virtual reference frame.

Optionally, when determining not to use the virtual reference frame, the decoder may obtain the original reference frame from the first reference frame list with reference to a standard video coding solution to perform inter prediction.

Optionally, when determining to use the virtual reference frame, the decoder may generate the virtual reference frame (for a method for generating the virtual reference frame, refer to S203 in the embodiment shown in FIG. 2a or S304 in the embodiment shown in FIG. 3a).

The virtual reference frame is a reference frame generated based on prior information. The prior information includes decoded information inside an encoder and information other than a to-be-encoded video/picture. The virtual reference frame may be used as supplementary information for inter coding, to further remove video time domain redundancy.

In this application, when the virtual reference frame is used, a problem of initialization of the virtual reference frame needs to be resolved, and memory space application, use, and release are involved.

In a possible implementation, the virtual reference frame is stored not in a storage space of a decoded picture buffer DPB, and the storage space may be a newly applied new storage area.

In this case, operations on the storage space for the virtual reference frame include:
1. applying for a new buffer as the storage space for the virtual reference frame;
2. adding the virtual reference frame in the storage space to the reference frame list through reference frame list management;
3. before writing a header file, releasing the buffer for the virtual reference frame, and restoring the reference frame list; and
4. processing a next frame and repeating the foregoing steps.

In a possible implementation, the virtual reference frame is stored in a specified space in a DPB. For example, the DPB may provide a storage space for 16 original reference frames. In addition, there is one or more remaining spaces. The virtual reference frame generated by the decoder may be stored in the one or more remaining spaces, and a virtual reference frame of a subsequent picture frame may overwrite previously stored content.

In this case, operations on the storage space for the virtual reference frame include:
1. extending and reusing the DPB, adding a reconstructed frame buffer, and reusing the buffer to copy the virtual reference frame to the buffer;
2. adding the virtual reference frame in the extended buffer to the reference frame list through reference frame management;
3. before writing a header file, releasing the buffer for the virtual reference frame, and restoring the reference frame list; and
4. processing a next frame, and repeating the foregoing steps until a virtual reference frame of a current frame overwrites a virtual reference frame of a previous frame.

Optionally, the virtual reference frame may be set as a short-term reference frame, for example, a POC value of the virtual reference frame is set to a POC value of a corresponding reconstructed frame. Alternatively, the virtual reference frame may be set as a long-term reference frame, for example, a POC value of the virtual reference frame is set to a POC value of a current to-be-decoded frame.

Step 504: Obtain, based on the virtual reference frame and the first reference frame list, a second reference frame list corresponding to the current frame.

A difference between the second reference frame list and the first reference frame list lies in that the second reference frame list includes not only the original reference frame, but also the virtual reference frame as a factor. In this application, the decoder may obtain the second reference frame list by using any one of the following methods:
(1) virtual reference frame insertion: inserting the virtual reference frame into a first position (for example, a position *Iₙ*) in the first reference frame list to obtain the second reference frame list;
(2) merge reference frame insertion: inserting a merge reference frame into a first position in the first reference frame list to obtain the second reference frame list;
(3) virtual reference frame replacement: replacing a first reference frame in the first reference frame list with the virtual reference frame to obtain the second reference frame list; or
(4) merge reference frame replacement: replacing a first reference frame in the first reference frame list with a merge reference frame to obtain the second reference frame list.

The first reference frame is a reference frame at the first position in the first reference frame list. Reference frames in the first reference frame list may be marked with different indexes for distinguishing. Therefore, the index may also represent a position in the first reference frame list, for example, *Iₙ* may represent an index of the first reference frame. In this case, the position *Iₙ* may be a position (namely, the first position) of the first reference frame.

The merge reference frame is obtained based on the virtual reference frame and a second reference frame in the first reference frame list, and the second reference frame is a reference frame at a second position (for example, a position *Rₙ*) in the first reference frame list. *Rₙ* is an index of the second reference frame in the first reference frame list.

In the methods (1) to (4), an insertion method is used in the methods (1) and (2). A reference frame related to the virtual reference frame is inserted into the original first reference frame list, to obtain the second reference frame list. The inserted reference frame is a virtual reference frame in the method (1), or is a merge reference frame in the method (2).

Correspondingly, because the new reference frame is inserted into the position of the first reference frame, an index of at least one reference frame in the first reference frame list needs to be increased by 1, and a total quantity of reference frames in the first reference frame list needs to be increased by 1. The index of the at least one reference frame is greater than or equal to the index of the first reference frame. For example, if the new reference frame is inserted into the position *Iₙ* in the first reference frame list, an index of a reference frame that is originally at the position *Iₙ* and an index of a reference frame following the reference frame in the first reference frame list are separately increased by 1. For example, indexes *Iₙ*, *I*_{*n*+1}, *I*_{*n+*2}, ... are changed to *I*_{*n+*1}, *I*_{*n+*2}, *I*_{*n+*3}, ... after being increased by 1. In addition, the total quantity of reference frames in the first reference frame list is increased by 1, to obtain the second reference frame list. That is, each time a new reference frame is inserted, the total quantity of reference frames in the second reference frame list is 1 greater than that in the first reference frame list. In a possible implementation, when a new reference frame is inserted after the last reference frame in the first reference frame list, because positions of all reference frames in the first reference frame list are not affected, in this case, none of indexes of the other reference frames is changed, and only the total quantity of reference frames in the first reference frame list is increased by 1, to obtain the second reference frame list.

In the methods (1) to (4), a replacement method is used in the methods (3) and (4). A reference frame in the original first reference frame list is replaced with a reference frame related to the virtual reference frame, to obtain the second reference frame list. The reference frame for replacement is a virtual reference frame in the method (3), or is a merge reference frame in the method (4).

Correspondingly, because the first reference frame in the first reference frame list is replaced with a new reference frame, related information of the first reference frame needs to be recorded. The information may include a POC, pixel information, encoding and decoding information, related settings, and the like of the first reference frame, to obtain the first reference frame again based on the information when the first reference frame list is restored from the second reference frame list, and replace the virtual reference frame/merge reference frame in the second reference frame list with the first reference frame. In the first reference frame list, an index of an original reference frame remains unchanged, and the quantity of reference frames remains unchanged.

It should be noted that, in addition to the four methods, another method may further be used in this application to obtain the second reference frame list. This is not specifically limited herein.

In this application, which one of the methods (1) to (4) is used to obtain the second reference frame list may be determined by using the following several methods:

### 1. One flag

The flag may be referred to as a first flag. The first flag indicates whether the virtual reference frame is used to obtain the second reference frame list, and a method, for obtaining the second reference frame list, used when the virtual reference frame is used to obtain the second reference frame list. The first flag is carried in the bitstream as a syntax element, and may be obtained by parsing the bitstream by the decoder.
a. When the first flag is a first value, the method (1) is used to obtain the second reference frame list; or
b. when the first flag is a second value, the method (2) is used to obtain the second reference frame list; or
c. when the first flag is a third value, the method (3) is used to obtain the second reference frame list; or
d. when the first flag is a fourth value, the method (4) is used to obtain the second reference frame list.

In this method, the first flag is reused. When the first flag is a thirteenth value, it indicates that the virtual reference frame is not used to obtain the second reference frame list.

In this application, a syntax element (the first flag) may be added, and different values are assigned to the syntax element, so that the decoder can read the syntax element to determine which method is used to obtain the second reference frame list. In this case, the first flag may have five valid values, for example, 0 (the thirteenth value, indicating that the virtual reference frame is not used), 1 (the first value, indicating virtual reference frame insertion), 2 (the second value, indicating merge reference frame insertion), 3 (the third value, indicating virtual reference frame replacement), and 4 (the fourth value, indicating merge reference frame replacement).

### 2. Two flags

The two flags may be respectively referred to as a second flag and a third flag. The second flag indicates whether the virtual reference frame is used to obtain the second reference frame list, and that when the virtual reference frame is used to obtain the second reference frame list, an insertion or replacement method is used to obtain the second reference frame list; and the third flag indicates the virtual reference frame or the merge reference frame. The second flag and the third flag are carried in the bitstream as syntax elements, and may be obtained by parsing the bitstream by the decoder.
a. When the second flag is a fifth value and the third flag is a sixth value, the method (1) is used to obtain the second reference frame list; or
b. when the second flag is a fifth value and the third flag is a seventh value, the method (2) is used to obtain the second reference frame list; or
c. when the second flag is an eighth value and the third flag is a sixth value, the method (3) is used to obtain the second reference frame list; or
d. when the second flag is an eighth value and the third flag is a seventh value, the method (4) is used to obtain the second reference frame list.

In this method, the second flag is reused. When the second flag is a fourteenth value, it indicates that the virtual reference frame is not used to obtain the second reference frame list.

In this application, two syntax elements (the second flag and the third flag) may be added, and different values are assigned to the two syntax elements, so that the decoder can read the syntax elements to determine which method is used to obtain the second reference frame list. In this case, the second flag may have three valid values, for example, 0 (the fourteenth value, indicating that the virtual reference frame is not used), 1 (the fifth value, indicating insertion), and 2 (the eighth value, indicating replacement); and the third flag may have two valid values, for example, 0 (the sixth value, indicating the virtual reference frame) and 1 (the seventh value, indicating the merge reference frame).

### 3. Three flags

The three flags may be respectively referred to as a fourth flag, a fifth flag, and a sixth flag. The fourth flag indicates whether the virtual reference frame is used to obtain the second reference frame list, the fifth flag indicates that an insertion or replacement method is used to obtain the second reference frame list, and the sixth flag indicates the virtual reference frame or the merge reference frame. The fourth flag, the fifth flag, and the sixth flag are carried in the bitstream as syntax elements, and may be obtained by parsing the bitstream by the decoder.
a. When the fourth flag is a ninth value, the fifth flag is a tenth value, and the sixth flag is an eleventh value, the method (1) is used to obtain the second reference frame list; or
b. when the fourth flag is a ninth value, the fifth flag is a tenth value, and the sixth flag is a twelfth value, the method (2) is used to obtain the second reference frame list; or
c. when the fourth flag is a ninth value, the fifth flag is a thirteenth value, and the sixth flag is an eleventh value, the method (3) is used to obtain the second reference frame list; or
d. when the fourth flag is a ninth value, the fifth flag is a thirteenth value, and the sixth flag is a twelfth value, the method (4) is used to obtain the second reference frame list.

In this method, the fourth flag is reused. When the fourth flag is a fifteenth value, it indicates that the virtual reference frame is not used to obtain the second reference frame list.

In this application, three syntax elements (the fourth flag, the fifth flag, and the sixth flag) may be added, and different values are assigned to the three syntax elements, so that the decoder can read the syntax elements to determine which method is used to obtain the second reference frame list. In this case, the fourth flag may have two valid values, for example, 0 (the fifteenth value, indicating that the virtual reference frame is not used) and 1 (the ninth value, indicating that the virtual reference frame is used); the fifth flag may have two valid values, for example, 0 (the tenth value, indicating insertion) and 1 (the thirteenth value, indicating replacement); and the sixth flag may have two valid values, for example, 0 (the eleventh value, indicating the virtual reference frame) and 1 (the twelfth value, indicating the merge reference frame).

It should be noted that, in addition to the three methods, another method may further be used in this application. For example, the encoder side and the decoder side may preset, according to a preset rule, which method is used to obtain the second reference frame list, and the encoder and the decoder perform corresponding steps based on the setting. Therefore, how to determine which one of the methods (1) to (4) is used to obtain the second reference frame list is not specifically limited in embodiments of this application.

In this application, one or more virtual reference frames may be obtained for the corresponding current frame. Therefore, the process of obtaining the second reference frame list may be performed once for each virtual reference frame until all virtual reference frames of the current frame are added to the reference frame list. In addition, based on an inter prediction feature of the current frame, the virtual reference frame may also include a forward reference frame and a backward reference frame. Correspondingly, the first reference frame list and the second reference frame list respectively include a forward reference frame list and a backward reference frame list, and the virtual reference frame is added to the corresponding reference frame list through forward and backward classification.

Optionally, the newly added syntax element may be stored in the following layer or structure, which includes but is not limited to a sequence parameter set (Sequence Parameter Set, SPS), a video parameter set (Video Parameter Set, VPS), a picture parameter set (Picture Parameter Set, PPS), a picture header (Picture Header, PH), and a slice header (Slice Header, SH). This is not specifically limited in this application.

Step 505: Obtain, based on the second reference frame list, a predicted picture corresponding to the current frame.

In a possible implementation, when determining, based on bitstream description information that is obtained from the bitstream through parsing, that the reference frame is a virtual reference frame, the decoder may select a corresponding virtual reference frame from the second reference frame list as the reference frame, and then determine a predicted picture based on the virtual reference frame.

In a possible implementation, when determining, based on bitstream description information that is obtained from the bitstream through parsing, that the reference frame is an original reference frame, the decoder may select a corresponding original reference frame from the second reference frame list as the reference frame, and then determine a predicted picture based on the original reference frame.

Due to motion of a camera and an object, a position of the same object in the current frame may be different from that in a previous frame. Motion information generated by a rendering engine can be used to accurately describe a coordinate correspondence (geometric relationship) between the two frames. Therefore, the virtual reference frame obtained based on the correspondence can more accurately predict the current frame than the original reference frame. Based on this, the virtual reference frame is introduced into the reference frame queue list as a factor. This can improve the inter coding performance, and further reduce the bit rate.

In a possible implementation, the second reference frame list may be restored to the first reference frame list.

In consideration of compatibility with various standards, after the reference frame list is changed to the second reference frame list, the decoder may further restore the second reference frame list to the first reference frame list. A restoration method may include the following two types:
1. When the insertion method in the methods (1) and (2) is used to obtain the second reference frame list, the inserted reference frame may be deleted, then an index of at least one reference frame in the second reference frame list is decreased by 1, and a total quantity of reference frames in the second reference frame list is decreased by 1. The index of the at least one reference frame is greater than or equal to an index of the inserted reference frame. For example, if the inserted reference frame is at a position *Iₙ* in the second reference frame list, an index of a reference frame that is originally at a position *I*_{*n*+1} in the second reference frame list and an index of a reference frame following the reference frame are separately decreased by 1. For example, indexes *I*_{*n*+1}, *I*_{*n+*2}, *I*_{*n+*3}, ... are changed to *Iₙ*, *I*_{*n*+1}, *I*_{*n+*2}, ... after being decreased by 1. In addition, the total quantity of reference frames in the second reference frame list is decreased by 1, to obtain the first reference frame list through restoration. In a possible implementation, when a deleted reference frame is the last reference frame in the second reference frame list, because a position of another reference frame in the second reference frame list is not affected, in this case, none of indexes of the other reference frames is changed, and only the total quantity of reference frames in the second reference frame list is decreased by 1, to obtain the first reference frame list through restoration.
2. When the replacement method in the methods (3) and (4) is used to obtain the second reference frame list, a replaced reference frame may be changed back to an original reference frame, and the original reference frame is previously recorded. Therefore, the original reference frame may be directly read from a corresponding storage space. In the second reference frame list, an index of the original reference frame remains unchanged, and the quantity of reference frames remains unchanged.

Step 506: Perform reconstruction based on the predicted picture and the residual picture, to obtain a reconstructed picture of the current frame.

After the predicted picture is obtained, the residual picture obtained through decoding may be superimposed with the predicted picture, to obtain the reconstructed picture. Then, loop filtering may be performed on the reconstructed picture, to obtain a filtered reconstructed picture and output the filtered reconstructed picture to a memory.

In this embodiment, a reference frame list is modified, the virtual reference frame is added to the reference frame list as a factor, and time domain correlation between the virtual reference frame and the current frame can be fully used. This can improve inter coding performance, and further reduce a bit rate.

The following uses several specific embodiments to describe in detail the technical solution of the method embodiment shown in FIG. 5.

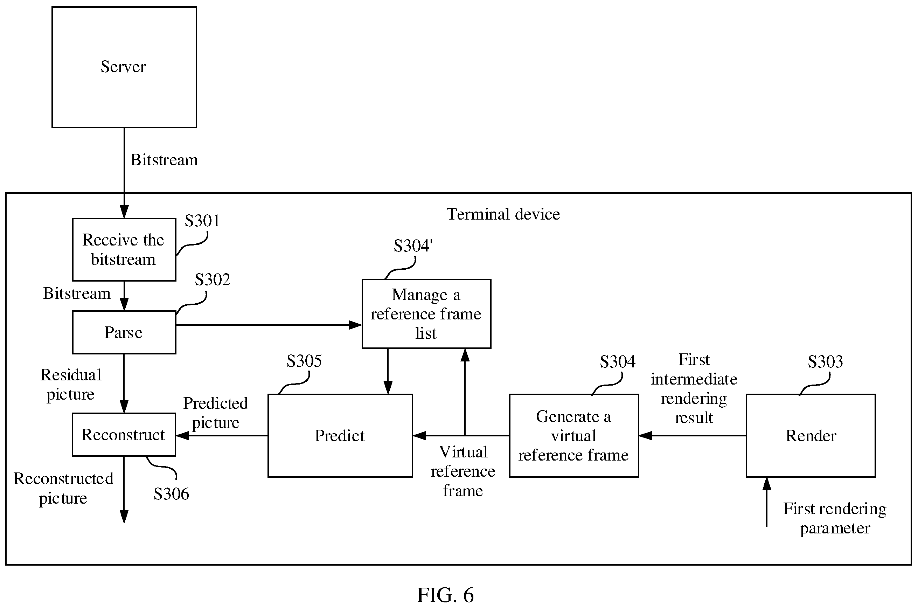

FIG. 6 is a diagram of a decoding procedure of a decoder according to this application. As shown in FIG. 6, based on the embodiment shown in FIG. 3a, step S304' of reference frame list management is added. For this step, refer to step 504 in the embodiment shown in FIG. 5. Before performing inter prediction on the current frame, the decoder performs reference frame list management based on the syntax element obtained through parsing or according to the preset rule, and introduces a virtual reference frame into a reference frame list, to facilitate subsequent inter prediction. It should be understood that reference frame list management in this application may be applied to any video coding standard that has reference frame list management.

In this application, a rule of reference frame list management is extended. A syntax element 1 is added to indicate whether to use a virtual reference frame. A syntax element 2 is added to indicate insertion or replacement. A syntax element 3 is added to indicate whether to use a merge reference frame. A syntax element 4 is added to indicate a position of insertion or replacement. A syntax element 5 is added to indicate an index of an original reference frame participating in merging. It should be noted that, in this application, there may be more or fewer newly added syntax elements than the foregoing syntax elements. This is not specifically limited.

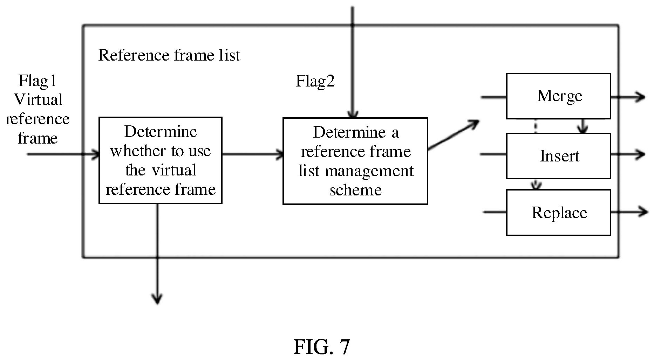

For example, FIG. 7 is a diagram of reference frame list management according to this application. As shown in FIG. 7, a reference frame list management method may include the following steps.
1. The decoder reads Flag1, and a decision process of the decoder is as follows:
   (a) When Flag1=0, the process ends. The technical solution is compatible with a standard reference frame list management method.
   (b) When Flag1=1, perform step 2.
2. The decoder reads Flag2.
   (a) If insertion is performed, a virtual reference frame is inserted into a position *Iₙ* in a reference frame list, an index of a reference frame whose index is greater than or equal to *Iₙ* in the reference frame list is increased by 1, and a quantity of reference frames in the reference frame list is increased by 1. After inter prediction is completed, the virtual reference frame at the position *Iₙ* and a virtual reference frame setting related to the virtual reference frame are deleted. An index of a reference frame whose index is greater than or equal to *Iₙ* in the reference frame list is decreased by 1, and a quantity of reference frames in the reference frame list is decreased by 1.
   (b) If replacement is performed, an original reference frame at a position *Iₙ* in a reference frame list is replaced with a virtual reference frame, information about the replaced original reference frame is recorded, and other information in the reference frame list remains unchanged. After inter prediction is completed, the virtual reference frame at the position *Iₙ* and a virtual reference frame setting related to the virtual reference frame are deleted, and the recorded original reference frame is inserted into the position *Iₙ*.
   (c) If merging is performed, insertion or replacement after merging is determined.
      i. If insertion is performed after merging, a virtual reference frame is merged with an original reference frame whose index is *Rₙ* in a reference frame list (the original reference frame is not changed), to obtain a merge reference frame, and the merge reference frame is inserted into a position *Iₙ* in the reference frame list. An index of a reference frame whose index is greater than or equal to *Iₙ* in the reference frame list is increased by 1, and a quantity of reference frames in the reference frame list is increased by 1. After inter prediction is completed, the merge reference frame at the position *Iₙ* and a virtual reference frame setting related to the merge reference frame are deleted. An index of a reference frame whose index is greater than or equal to *Iₙ* in the reference frame list is decreased by 1, and a quantity of reference frames in the reference frame list is decreased by 1.
      ii. If replacement is performed after merging, a virtual reference frame is merged with an original reference frame whose index is *Rₙ* in a reference frame list (the original reference frame is not changed), to obtain a merge reference frame, the original reference frame at a position *Iₙ* in the reference frame list is replaced with the merge reference frame, information about the replaced original reference frame is recorded, and other information in the reference frame list remains unchanged. After inter prediction is completed, the merge reference frame at the position *Iₙ* and a virtual reference frame setting related to the merge reference frame are deleted, and the recorded original reference frame is inserted into the position *Iₙ*.

In a possible implementation, in steps (2-a) and (2-c)-i, when the position *Iₙ* is after the last reference frame in the reference frame list, because positions of all reference frames in the reference frame list are not affected, in this case, none of indexes of the other reference frames is changed, and only the total quantity of reference frames in the reference frame list is increased by 1. Correspondingly, after inter prediction is completed, because the position (the position *Iₙ*) of the deleted reference frame is at the end of the reference frame list, and positions of the other reference frames in the reference frame list are not affected, in this case, none of indexes of the other reference frames is changed, and only the total quantity of reference frames in the reference frame list is decreased by 1.

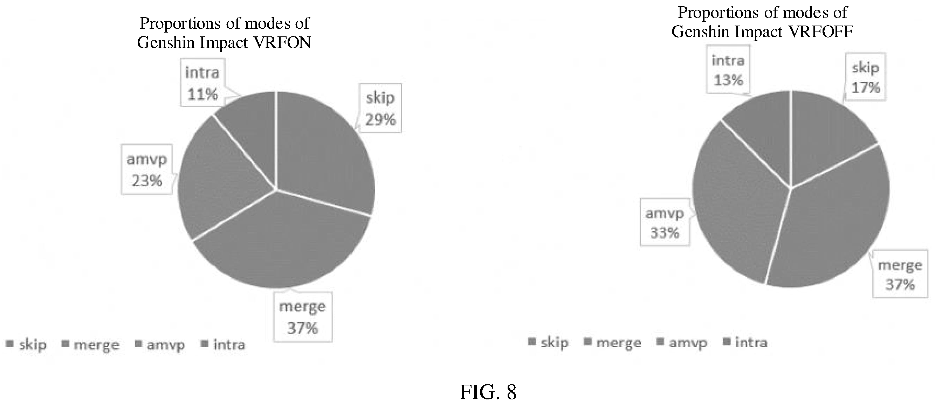

In this embodiment, the virtual reference frame is generated based on a rendering engine and reconstructed prior information, and time domain correlation between the virtual reference frame and a current frame is strong. This can reduce a motion vector amplitude, improve prediction accuracy, and further improve inter prediction performance. Compared with the original reference frame, the virtual reference frame can effectively increase a proportion of a skip (skip) mode in inter prediction, thereby reducing a bit rate and improving decoding performance. For example, FIG. 8 shows a statistical result of an inter coding mode. As shown in FIG. 8, a statistical result of adding the virtual reference frame is shown on the left, and a statistical result of no virtual reference frame is shown on the right.

In a possible implementation, based on the embodiment shown in FIG. 7, a syntax element may be deleted, and an encoder side and a decoder side perform reference frame list management according to a preset principle. For example, the encoder side and the decoder side perform reference frame list management by using a virtual reference frame insertion/virtual frame replacement/merge reference frame insertion/merge reference frame replacement method. In this case, no syntax element needs to be added. This reduces a bitstream, and reduces a bit rate.

In a possible implementation, based on the embodiment shown in FIG. 7, the syntax element may be refined, to perform reference frame list management in a more specific implementation.

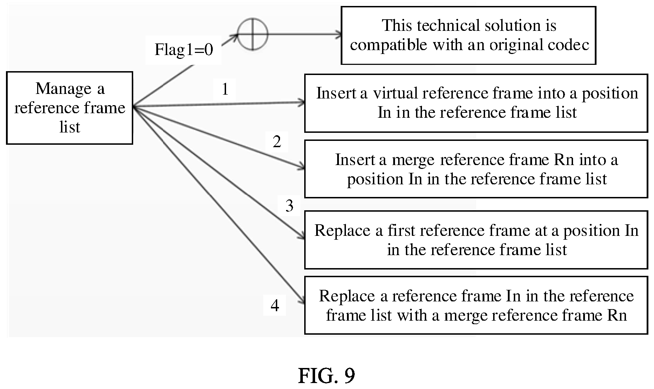

For example, FIG. 9 is a diagram of reference frame list management according to this application. As shown in FIG. 9, a reference frame list management method may include the following steps.
1. The decoder reads a syntax element Flag1.
2. Perform the following operations based on the value of Flag1 :
   (a) When Flag1=0, refer to step (1-a) in the embodiment shown in FIG. 7. The technical solution is compatible with a standard reference frame list management method.
   (b) When Flag1=1, refer to step (2-a) in the embodiment shown in FIG. 7. Perform virtual reference frame insertion.
   (c) When Flagl=3, refer to step (2-b) in the embodiment shown in FIG. 7. Perform virtual reference frame replacement.
   (d) When Flag1=2 or 4, refer to step (2-c) in the embodiment shown in FIG. 7. Perform merge reference frame insertion or replacement.

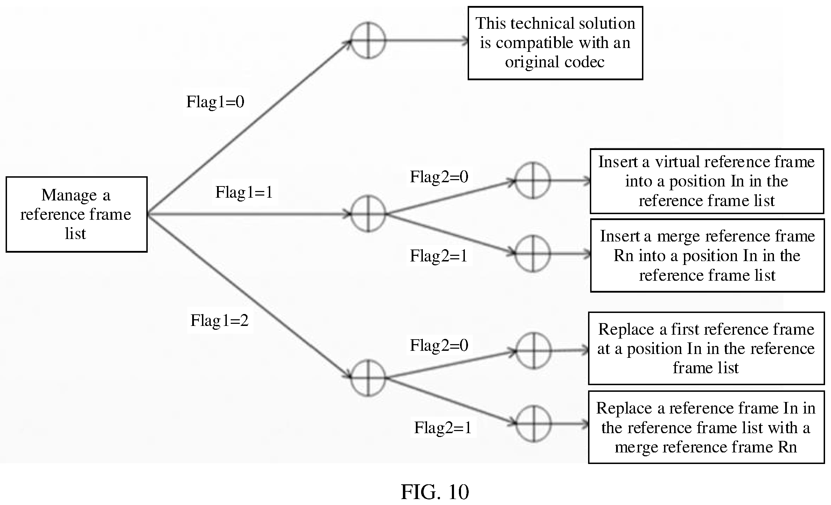

For example, FIG. 10 is a diagram of reference frame list management according to this application. As shown in FIG. 10, a reference frame list management method may include the following steps.
1. The decoder reads a syntax element Flag1.
2. When Flagl=0, refer to step (1-a) in the embodiment shown in FIG. 7. The technical solution is compatible with a standard reference frame list management method.
3. When Flag1=1, read Flag2.
   (a) When Flag2=0, refer to step (2-a) in the embodiment shown in FIG. 7. Perform virtual reference frame insertion.
   (b) When Flag2=1, refer to step (2-c)-i in the embodiment shown in FIG. 7. Perform merge reference frame insertion.
4. When Flag1=2, read Flag2.
   (a) When Flag2=0, refer to step (2-b) in the embodiment shown in FIG. 7. Perform virtual reference frame replacement.
   (b) When Flag2=1, refer to step (2-c)-ii in the embodiment shown in FIG. 7. Perform merge reference frame replacement.

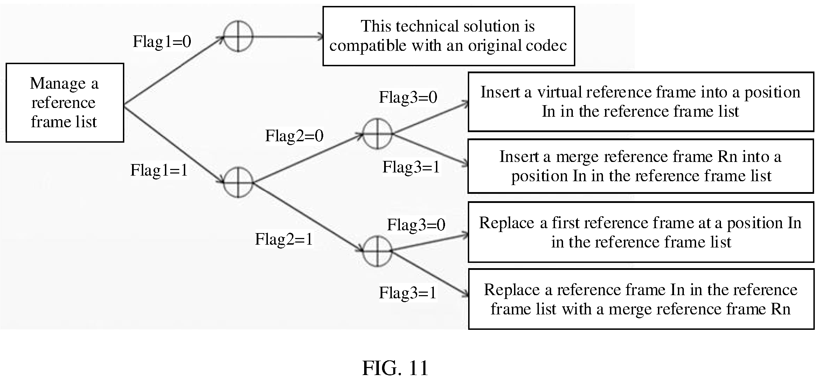

For example, FIG. 11 is a diagram of reference frame list management according to this application. As shown in FIG. 11, a reference frame list management method may include the following steps.
1. The decoder reads a syntax element Flag1.
2. When Flag1=0, refer to step (1-a) in the embodiment shown in FIG. 7. The technical solution is compatible with a standard reference frame list management method.
3. When Flag1=1, read Flag2.
   (a) When Flag2=0, read Flag3.
      i. When Flag3=0, refer to step (2-a) in the embodiment shown in FIG. 7. Perform virtual reference frame insertion.
      ii. When Flag3=1, refer to step (2-c)-i in the embodiment shown in FIG. 7. Perform merge reference frame insertion.
   (b) When Flag2=1, read Flag3.
      i. When Flag3=0, refer to step (2-b) in the embodiment shown in FIG. 7. Perform virtual reference frame replacement.
      ii. When Flag3=1, refer to step (2-c)-ii in the embodiment shown in FIG. 7. Perform merge reference frame replacement.

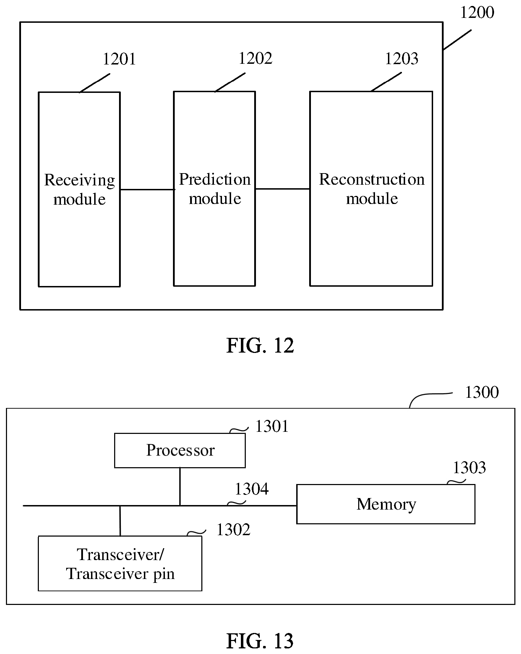

FIG. 12 is a diagram of a structure of a picture decoding apparatus 1200 according to this application. As shown in FIG. 12, the picture decoding apparatus 1200 in this embodiment may be used in the terminal device. The picture decoding apparatus 1200 may include a receiving module 1201, a prediction module 1202, and a reconstruction module 1203.

The receiving module 1201 is configured to receive a bitstream. The prediction module 1202 is configured to: obtain, based on the bitstream, a residual picture and a first reference frame list that correspond to a current frame; obtain a virtual reference frame corresponding to the current frame; obtain, based on the virtual reference frame and the first reference frame list, a second reference frame list corresponding to the current frame; and obtain, based on the second reference frame list, a predicted picture corresponding to the current frame. The reconstruction module 1203 is configured to perform reconstruction based on the predicted picture and the residual picture, to obtain a reconstructed picture of the current frame.

In a possible implementation, the prediction module 1202 is specifically configured to implement any one of the following methods:
(1) inserting the virtual reference frame into a first position in the first reference frame list to obtain the second reference frame list;
(2) inserting a merge reference frame into a first position in the first reference frame list to obtain the second reference frame list;
(3) replacing a first reference frame in the first reference frame list with the virtual reference frame to obtain the second reference frame list; or
(4) replacing a first reference frame in the first reference frame list with a merge reference frame to obtain the second reference frame list.

The first reference frame is a reference frame at the first position in the first reference frame list, the merge reference frame is obtained based on the virtual reference frame and a second reference frame in the first reference frame list, and the second reference frame is a reference frame at a second position in the first reference frame list.

In a possible implementation, the prediction module 1202 is specifically configured to: obtain a first flag from the bitstream, where the first flag indicates whether the virtual reference frame is used to obtain the second reference frame list, and a method, for obtaining the second reference frame list, used when the virtual reference frame is used to obtain the second reference frame list; and when the first flag is a first value, the method (1) is used to obtain the second reference frame list, or when the first flag is a second value, the method (2) is used to obtain the second reference frame list, or when the first flag is a third value, the method (3) is used to obtain the second reference frame list, or when the first flag is a fourth value, the method (4) is used to obtain the second reference frame list.

In a possible implementation, the prediction module 1202 is specifically configured to: obtain a second flag and a third flag from the bitstream, where the second flag indicates whether the virtual reference frame is used to obtain the second reference frame list, and that when the virtual reference frame is used to obtain the second reference frame list, an insertion or replacement method is used to obtain the second reference frame list, and the third flag indicates the virtual reference frame or the merge reference frame; and when the second flag is a fifth value and the third flag is a sixth value, the method (1) is used to obtain the second reference frame list, or when the second flag is a fifth value and the third flag is a seventh value, the method (2) is used to obtain the second reference frame list, or when the second flag is an eighth value and the third flag is a sixth value, the method (3) is used to obtain the second reference frame list, or when the second flag is an eighth value and the third flag is a seventh value, the method (4) is used to obtain the second reference frame list.

In a possible implementation, the prediction module 1202 is specifically configured to: obtain a fourth flag, a fifth flag, and a sixth flag from the bitstream, where the fourth flag indicates whether the virtual reference frame is used to obtain the second reference frame list, the fifth flag indicates that an insertion or replacement method is used to obtain the second reference frame list, and the sixth flag indicates the virtual reference frame or the merge reference frame; and when the fourth flag is a ninth value, the fifth flag is a tenth value, and the sixth flag is an eleventh value, the method (1) is used to obtain the second reference frame list, or when the fourth flag is a ninth value, the fifth flag is a tenth value, and the sixth flag is a twelfth value, the method (2) is used to obtain the second reference frame list, or when the fourth flag is a ninth value, the fifth flag is a thirteenth value, and the sixth flag is an eleventh value, the method (3) is used to obtain the second reference frame list, or when the fourth flag is a ninth value, the fifth flag is a thirteenth value, and the sixth flag is a twelfth value, the method (4) is used to obtain the second reference frame list.

In a possible implementation, when the first flag is a thirteenth value, it indicates that the virtual reference frame is not used to obtain the second reference frame list.

In a possible implementation, when the second flag is a fourteenth value, it indicates that the virtual reference frame is not used to obtain the second reference frame list.

In a possible implementation, when the fourth flag is a fifteenth value, it indicates that the virtual reference frame is not used to obtain the second reference frame list.

In a possible implementation, the prediction module is further configured to: when the method (1) or the method (2) is used, separately increase an index of at least one reference frame in the first reference frame list by 1, and increase a total quantity of reference frames in the first reference frame list by 1, where the index of the at least one reference frame is greater than or equal to an index of the first reference frame.

In a possible implementation, the prediction module 1202 is further configured to: when the method (3) or the method (4) is used, record related information of the first reference frame.

In a possible implementation, the prediction module 1202 is further configured to restore the second reference frame list to the first reference frame list.

In a possible implementation, the virtual reference frame is stored not in a storage space of a decoded picture buffer DPB, or the virtual reference frame is stored in a specified space in the DPB.

In a possible implementation, a flag obtained from the bitstream is stored in a sequence parameter set SPS, a video parameter set VPS, a picture parameter set PPS, a picture header PH, or a slice header SH, and the flag includes the first flag, the second flag, the third flag, the fourth flag, the fifth flag, and the sixth flag.

In a possible implementation, the prediction module 1202 is specifically configured to: obtain rendering information from the bitstream, and obtain the virtual reference frame based on a decoded reconstructed picture and the rendering information, where the rendering information is from a server.

In a possible implementation, the apparatus is used in a device-cloud collaboration system, the device-cloud collaboration system includes the server and a terminal device, the server includes an encoder, and the terminal device includes a decoder.

The apparatus in this embodiment may be used to perform the technical solutions of the method embodiment shown in FIG. 5. An implementation principle and technical effect of the apparatus are similar to those of the method embodiment. Details are not described herein again.

For example, FIG. 13 is a block diagram of an apparatus 1300 according to this application. The apparatus 1300 may include a processor 1301 and a transceiver/transceiver pin 1302, and optionally, further include a memory 1303.

Components of the apparatus 1300 are coupled together through a bus 1304. In addition to a data bus, the bus 1304 further includes a power bus, a control bus, a status signal bus, and the like. However, for clarity of description, various buses in the figure are referred to as the bus 1304.

Optionally, the memory 1303 may be used for instructions in the method embodiment. The processor 1301 may be configured to: execute the instructions in the memory 1303, control a receive pin to receive a signal, and control a transmit pin to send a signal.

The apparatus 1300 may be the terminal device or a chip of the terminal device in the method embodiment.

In an implementation process, the steps in the method embodiment may be completed via a hardware integrated logic circuit in the processor, or instructions in a form of software. The processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly performed and completed by a hardware encoding processor, or may be performed and completed by a combination of hardware and software modules in an encoding processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the methods in combination with hardware of the processor.

The memory in the foregoing embodiments may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory in the system and the method described in this specification includes but is not limited to these memories and any memory of another proper type.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that this implementation goes beyond the scope of this application.

It may be clearly understood by a person skilled in the art that, for ease and brevity of description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in another manner. For example, the described apparatus embodiment is merely an example. For example, division into the units is merely logic function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, in a mechanical form, or in another form.

The units described as separate parts may or may not be physically separate, and parts displayed as units may or may not be physical units, may be located in one place, or may be distributed on a plurality of network units. Some or all of the units may be selected based on actual requirements to achieve the objectives of the solutions in embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or all or some of the technical solutions may be implemented in a form of a software product. The computer software product is stored in a storage medium and includes several instructions for instructing a computer device (a personal computer, a server, a network device, or the like) to perform all or some of the steps of the methods in embodiments of this application. The foregoing storage medium includes any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A picture decoding method, comprising:
receiving a bitstream;
obtaining, based on the bitstream, a residual picture and a first reference frame list that correspond to a current frame;
obtaining a virtual reference frame corresponding to the current frame;
obtaining, based on the virtual reference frame and the first reference frame list, a second reference frame list corresponding to the current frame;
obtaining, based on the second reference frame list, a predicted picture corresponding to the current frame; and
performing reconstruction based on the predicted picture and the residual picture, to obtain a reconstructed picture of the current frame.

2. The method according to claim 1, wherein obtaining, based on the virtual reference frame and the first reference frame list, the second reference frame list corresponding to the current frame comprises any one of the following methods:
(1) inserting the virtual reference frame into a first position in the first reference frame list to obtain the second reference frame list;
(2) inserting a merge reference frame into a first position in the first reference frame list to obtain the second reference frame list;
(3) replacing a first reference frame in the first reference frame list with the virtual reference frame to obtain the second reference frame list; or
(4) replacing a first reference frame in the first reference frame list with a merge reference frame to obtain the second reference frame list, wherein
the first reference frame is a reference frame at the first position in the first reference frame list, the merge reference frame is obtained based on the virtual reference frame and a second reference frame in the first reference frame list, and the second reference frame is a reference frame at a second position in the first reference frame list.

3. The method according to claim 2, wherein obtaining, based on the virtual reference frame and the first reference frame list, the second reference frame list corresponding to the current frame comprises:
obtaining a first flag from the bitstream, wherein the first flag indicates whether the virtual reference frame is used to obtain the second reference frame list, and a method, for obtaining the second reference frame list, used when the virtual reference frame is used to obtain the second reference frame list; and
when the first flag is a first value, the method (1) is used to obtain the second reference frame list; or
when the first flag is a second value, the method (2) is used to obtain the second reference frame list; or
when the first flag is a third value, the method (3) is used to obtain the second reference frame list; or
when the first flag is a fourth value, the method (4) is used to obtain the second reference frame list.

4. The method according to claim 2, wherein obtaining, based on the virtual reference frame and the first reference frame list, the second reference frame list corresponding to the current frame comprises:
obtaining a second flag and a third flag from the bitstream, wherein the second flag indicates whether the virtual reference frame is used to obtain the second reference frame list, and that when the virtual reference frame is used to obtain the second reference frame list, an insertion or replacement method is used to obtain the second reference frame list; and the third flag indicates the virtual reference frame or the merge reference frame; and
when the second flag is a fifth value and the third flag is a sixth value, the method (1) is used to obtain the second reference frame list; or
when the second flag is a fifth value and the third flag is a seventh value, the method (2) is used to obtain the second reference frame list; or
when the second flag is an eighth value and the third flag is a sixth value, the method (3) is used to obtain the second reference frame list; or
when the second flag is an eighth value and the third flag is a seventh value, the method (4) is used to obtain the second reference frame list.

5. The method according to claim 2, wherein obtaining, based on the virtual reference frame and the first reference frame list, the second reference frame list corresponding to the current frame comprises:
obtaining a fourth flag, a fifth flag, and a sixth flag from the bitstream, wherein the fourth flag indicates whether the virtual reference frame is used to obtain the second reference frame list, the fifth flag indicates that an insertion or replacement method is used to obtain the second reference frame list, and the sixth flag indicates the virtual reference frame or the merge reference frame; and
when the fourth flag is a ninth value, the fifth flag is a tenth value, and the sixth flag is an eleventh value, the method (1) is used to obtain the second reference frame list; or
when the fourth flag is a ninth value, the fifth flag is a tenth value, and the sixth flag is a twelfth value, the method (2) is used to obtain the second reference frame list; or
when the fourth flag is a ninth value, the fifth flag is a thirteenth value, and the sixth flag is an eleventh value, the method (3) is used to obtain the second reference frame list; or
when the fourth flag is a ninth value, the fifth flag is a thirteenth value, and the sixth flag is a twelfth value, the method (4) is used to obtain the second reference frame list.

6. The method according to claim 3, wherein when the first flag is a thirteenth value, it indicates that the virtual reference frame is not used to obtain the second reference frame list.

7. The method according to claim 4, wherein when the second flag is a fourteenth value, it indicates that the virtual reference frame is not used to obtain the second reference frame list.

8. The method according to claim 5, wherein when the fourth flag is a fifteenth value, it indicates that the virtual reference frame is not used to obtain the second reference frame list.

9. The method according to any one of claims 2 to 8, further comprising:
when the method (1) or the method (2) is used, separately increasing an index of at least one reference frame in the first reference frame list by 1, and increasing a total quantity of reference frames in the first reference frame list by 1, wherein the index of the at least one reference frame is greater than or equal to an index of the first reference frame.

10. The method according to any one of claims 2 to 8, further comprising:
when the method (3) or the method (4) is used, recording related information of the first reference frame.

11. The method according to any one of claims 1 to 10, wherein after obtaining, from the second reference frame list, the predicted picture corresponding to the current frame, the method further comprises:
restoring the second reference frame list to the first reference frame list.

12. The method according to any one of claims 1 to 11, wherein the virtual reference frame is stored not in a storage space of a decoded picture buffer DPB, or the virtual reference frame is stored in a specified space in the DPB.

13. The method according to any one of claims 3 to 5, wherein a flag obtained from the bitstream is stored in a sequence parameter set SPS, a video parameter set VPS, a picture parameter set PPS, a picture header PH, or a slice header SH, and the flag comprises the first flag, the second flag, the third flag, the fourth flag, the fifth flag, and the sixth flag.

14. The method according to any one of claims 1 to 13, wherein obtaining the virtual reference frame corresponding to the current frame comprises:
obtaining rendering information from the bitstream; and
obtaining the virtual reference frame based on a decoded reconstructed picture and the rendering information, wherein the rendering information is from a server.

15. The method according to any one of claims 1 to 14, wherein the method is applied to a device-cloud collaboration system, the device-cloud collaboration system comprises the server and a terminal device, the server comprises an encoder, and the terminal device comprises a decoder.

16. A bitstream generation method, wherein a bitstream is generated based on the virtual reference frame according to any one of claims 1 to 15.

17. The method according to claim 16, wherein the bitstream comprises a first flag, wherein the first flag indicates whether the virtual reference frame is used to obtain a second reference frame list, and a method, for obtaining the second reference frame list, used when the virtual reference frame is used to obtain the second reference frame list.

18. The method according to claim 16, wherein the bitstream comprises a second flag and a third flag, wherein the second flag indicates whether the virtual reference frame is used to obtain a second reference frame list, and that when the virtual reference frame is used to obtain the second reference frame list, an insertion or replacement method is used to obtain the second reference frame list; and the third flag indicates the virtual reference frame or a merge reference frame.

19. The method according to claim 16, wherein the bitstream comprises a fourth flag, a fifth flag, and a sixth flag, wherein the fourth flag indicates whether the virtual reference frame is used to obtain the second reference frame list, the fifth flag indicates that an insertion or replacement method is used to obtain the second reference frame list, and the sixth flag indicates the virtual reference frame or the merge reference frame.

20. A terminal device, comprising:
a memory and a processor, wherein the memory is coupled to the processor; and
the memory stores program instructions, and when the program instructions are executed by the processor, the terminal device is enabled to perform the method according to any one of claims 1 to 15.

21. A chip, comprising one or more interface circuits and one or more processors, wherein the interface circuit is configured to: receive a signal from a memory of a terminal device, and send the signal to the processor, wherein the signal comprises computer instructions stored in the memory, and when the processor executes the computer instructions, the terminal device is enabled to perform the method according to any one of claims 1 to 15.

22. A computer-readable storage medium, wherein the computer-readable storage medium stores a computer program, and when the computer program is run on a computer or a processor, the computer or the processor is enabled to perform the method according to any one of claims 1 to 15.

23. A computer program product, wherein the computer program product comprises computing instructions, and when the computing instructions are executed by a computer or a processor, steps of the method according to any one of claims 1 to 15 are performed.

24. A bitstream storage apparatus, wherein the apparatus comprises a receiver and at least one storage medium, wherein
the receiver is configured to receive a bitstream; and
the at least one storage medium is configured to store the bitstream, wherein
the bitstream is generated according to the method according to any one of claims 16 to 19.

25. A bitstream transmission apparatus, wherein the apparatus comprises a transmitter and at least one storage medium, wherein
the at least one storage medium is configured to store a bitstream, wherein the bitstream is generated according to the method according to any one of claims 16 to 19; and
the transmitter is configured to: obtain the bitstream from the storage medium, and send the bitstream to a device-side device through a transmission medium.

26. A bitstream distribution system, wherein the system comprises:
at least one storage medium, configured to store at least one bitstream, wherein the at least one bitstream is generated according to the method according to any one of claims 16 to 19; and
a streaming media device, configured to: obtain a target bitstream from the at least one storage medium, and send the target bitstream to a device-side device, wherein the streaming media device comprises a content server or a content distribution server.

27. A bitstream, wherein the bitstream comprises a second flag and a third flag, wherein the second flag indicates whether a virtual reference frame is used to obtain a second reference frame list, and that when the virtual reference frame is used to obtain the second reference frame list, an insertion or replacement method is used to obtain the second reference frame list; and the third flag indicates the virtual reference frame or a merge reference frame;
when the second flag is a fifth value and the third flag is a sixth value, a method (1) is used to obtain the second reference frame list; or
when the second flag is a fifth value and the third flag is a seventh value, a method (2) is used to obtain the second reference frame list; or
when the second flag is an eighth value and the third flag is a sixth value, a method (3) is used to obtain the second reference frame list; or
when the second flag is an eighth value and the third flag is a seventh value, a method (4) is used to obtain the second reference frame list; and
a method for obtaining the second reference frame list comprises:
(1) inserting the virtual reference frame into a first position in a first reference frame list to obtain the second reference frame list;
(2) inserting the merge reference frame into a first position in a first reference frame list to obtain the second reference frame list;
(3) replacing a first reference frame in a first reference frame list with the virtual reference frame to obtain the second reference frame list; or
(4) replacing a first reference frame in a first reference frame list with the merge reference frame to obtain the second reference frame list.

28. The bitstream according to claim 27, wherein when the second flag is a fourteenth value, it indicates that the virtual reference frame is not used to obtain the second reference frame list.

29. A bitstream, wherein the bitstream comprises a fourth flag, a fifth flag, and a sixth flag, wherein the fourth flag indicates whether a virtual reference frame is used to obtain a second reference frame list, the fifth flag indicates that an insertion or replacement method is used to obtain the second reference frame list, and the sixth flag indicates the virtual reference frame or a merge reference frame;
when the fourth flag is a ninth value, the fifth flag is a tenth value, and the sixth flag is an eleventh value, a method (1) is used to obtain the second reference frame list; or
when the fourth flag is a ninth value, the fifth flag is a tenth value, and the sixth flag is a twelfth value, a method (2) is used to obtain the second reference frame list; or
when the fourth flag is a ninth value, the fifth flag is a thirteenth value, and the sixth flag is an eleventh value, a method (3) is used to obtain the second reference frame list; or
when the fourth flag is a ninth value, the fifth flag is a thirteenth value, and the sixth flag is a twelfth value, a method (4) is used to obtain the second reference frame list; and
a method for obtaining the second reference frame list comprises:
(1) inserting the virtual reference frame into a first position in a first reference frame list to obtain the second reference frame list;
(2) inserting the merge reference frame into a first position in a first reference frame list to obtain the second reference frame list;
(3) replacing a first reference frame in a first reference frame list with the virtual reference frame to obtain the second reference frame list; or
(4) replacing a first reference frame in a first reference frame list with the merge reference frame to obtain the second reference frame list.

30. The bitstream according to claim 29, wherein when the fourth flag is a fifteenth value, it indicates that the virtual reference frame is used to obtain the second reference frame list.
